(19) **Europäisches Patentamt**
**European Patent Office**
**Office européen des brevets**

(11) **EP 1 413 045 B1**

(12) **EUROPÄISCHE PATENTSCHRIFT**

(45) Veröffentlichungstag und Bekanntmachung des Hinweises auf die Patenterteilung:
**23.07.2008   Patentblatt 2008/30**

(51) Int Cl.:
*H02P 6/06* (2006.01)          *H02P 6/16* (2006.01)
*G01P 3/481* (2006.01)

(21) Anmeldenummer: **02760206.9**

(86) Internationale Anmeldenummer:
**PCT/EP2002/007204**

(22) Anmeldetag: **29.06.2002**

(87) Internationale Veröffentlichungsnummer:
**WO 2003/012971 (13.02.2003 Gazette 2003/07)**

(54) **VERFAHREN ZUM BESTIMMEN EINES NUMERISCHEN WERTES FÜR DIE ZEITLICHE DAUER EINES SICH PERIODISCH WIEDERHOLENDEN IMPULSFÖRMIGEN SIGNALS, UND VORRICHTUNG ZUR DURCHFÜHRUNG EINES SOLCHEN VERFAHRENS**

METHOD FOR DETERMINING THE NUMERICAL VALUE FOR THE DURATION OF A PERIODICALLY REPEATED PULSE SIGNAL, AND DEVICE FOR CARRYING OUT SAID METHOD

PROCEDE SERVANT A DETERMINER UNE VALEUR NUMERIQUE POUR LA DUREE TEMPORELLE D'UN SIGNAL IMPULSIONNEL SE REPETANT PERIODIQUEMENT, AINSI QUE DISPOSITIF POUR L'EXECUTION D'UN TEL PROCEDE

(84) Benannte Vertragsstaaten:
**AT BE CH CY DE DK ES FI FR GB GR IE IT LI LU MC NL PT SE TR**

(30) Priorität: **01.08.2001   DE 10137726**

(43) Veröffentlichungstag der Anmeldung:
**28.04.2004   Patentblatt 2004/18**

(73) Patentinhaber: **ebm-papst St. Georgen GmbH & Co. KG**
**78112 St. Georgen (DE)**

(72) Erfinder:
• **KUNER, Arnold**
**78112 St. Georgen (DE)**

• **SCHONDELMAIER, Hans-Dieter**
**78112 St. Georgen (DE)**

(74) Vertreter: **Raible, Hans**
**Raible & Raible**
**Patentanwälte**
**Schoderstrasse 10**
**70192 Stuttgart (DE)**

(56) Entgegenhaltungen:
**EP-A- 0 209 656**          **DE-A- 4 241 702**
**DE-A- 10 036 839**          **US-A- 4 371 819**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Bestimmen eines numerischen Wertes für die zeitliche Dauer eines sich periodisch wiederholenden impulsförmigen Signals, und eine Vorrichtung zur Durchführung eines solchen Verfahrens.

Bei der Steuerung der Drehzahl von Elektromotoren wird gewöhnlich einem Drehzahlregler ein sogenanntes Sollwertsignal (rated speed signal) vorgegeben, d.h. dem Drehzahlregler wird durch ein geeignetes Signal befohlen, dass der Motor z.B. mit 32246, oder mit 1100,5 U/min, laufen soll.

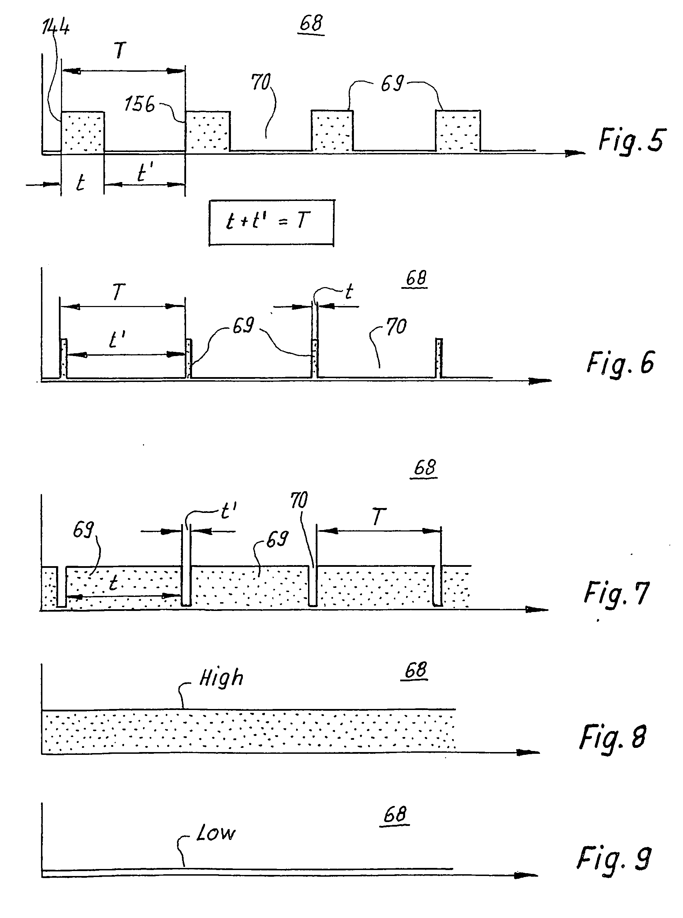

Dieses Sollwertsignal kann z.B. eine Spannung zwischen 0 und 5 V sein, oder eine Frequenz, oder das Verhältnis von Signaldauer zu Periodendauer, auch Tastverhältnis genannt, bei einem periodisch wiederkehrenden Signal, wie es in Fig. 5 bei 68 dargestellt ist. Ein solches Signal hat dann eine bestimmte Frequenz, die gewöhnlich irgendwo zwischen 2000 und 5000 Hz liegen wird, und durch die Größe des Tastverhältnisses, das zwischen 0 % und 100 % liegen kann, wird dem Drehzahlregler angegeben, mit welcher Drehzahl der Motor im Augenblick laufen soll, wobei z.B. ein Tastverhältnis von 0 % den Stillstand des Motors und von 100 % eine hohe Drehzahl bedeuten kann.

Für die Steuerung und Regelung solcher Motoren werden häufig Mikroprozessoren ($\mu$P) oder Mikrocontroller ($\mu$C) verwendet, wobei in den Ansprüchen als generischer Begriff für beides der Begriff Mikroprozessor ($\mu$P) verwendet wird. Ein solcher $\mu$P steuert gewöhnlich die Kommutierung des Motors, sofern das ein elektronisch kommutierter Motor (ECM) ist, und er dient auch zur Regelung der Drehzahl und ggf. zur Ausführung weiterer Funktionen.

Ein solcher $\mu$P braucht für seinen Regler als Sollwert einen numerischen Wert, z.B. "37" oder "214", d.h. bei einem Signal der eingangs beschriebenen Art muss das Verhältnis von Signaldauer zu Periodendauer, oder das Verhältnis von Signalpause zu Periodendauer, in eine geeignete numerische Größe umgesetzt werden, die z.B. im Zahlenbereich 0 ... 255 oder 0 ... 1023 liegt. Das setzt voraus, dass sowohl die Periodendauer wie die Signaldauer möglichst genau erfasst werden, soweit das mit einem billigen $\mu$P möglich ist, wie er bei Motoren aus Kostengründen verwendet wird.

Aus der DE-A-4 241 702 kennt man ein Verfahren zum Bestimmen eines numerischen Wertes für eine analoge Spannung. Hierzu wird diese analoge Spannung zuerst gefiltert und dann in einen geglätteten Wert umgewandelt. Letzterer wird mit einem Dreiecksignal verglichen, so dass man ein PWM-Signal erhält. In diesem werden die Impulse und Impulspausen durch Zähler vermessen. So erhält man einen Wert TH für die Dauer eines Impulses, und einen Wert TL für die Länge einer Impulspause. Durch Addition von TH und TL erhält man die Periodendauer TALL dieses Signals, und aus diesen Werten berechnet man schließlich das Tastverhältnis

$$\mathrm{REF} = \mathrm{TH/TALL.}$$

Aus der EP-A-0 209 656 ist es bekannt, bei einem digitalen Signal die Periodendauer zwischen zwei negativen Flanken zu messen. Bei Erreichen der zweiten negativen Flanke wird der verwendete Zähler wieder auf Null gestellt. Zusätzlich wird ständig abgefragt, ob eine positive Flanke aufgetreten ist, und falls ja, wird auch noch diese Zeit erfasst.

Aus der DE-A-10 036 839 ist für die Messung der Drehzahl bei einem Motor die Verwendung einer Zustandsmaschine bekannt. Nach Erfüllung bestimmter Kriterien wird der augenblickliche Wert in der Zustandsmaschine erhöht.

Es ist eine Aufgabe der Erfindung, ein neues Verfahren zum Bestimmen eines numerischen Wertes für die zeitliche Dauer eines sich periodisch wiederholenden impulsförmigen Signals, sowie eine Vorrichtung zur Durchführung eines solchen Verfahrens, bereit zu stellen.

Nach der Erfindung wird diese Aufgabe gelöst durch den Gegenstand des Patentanspruchs 1. Dadurch, dass man die Periodendauer und die charakteristische Größe in zeitlichen Abständen ermittelt, kann man diese Werte sequentiell ermitteln und anschließend weiterverarbeiten. Dies ermöglicht die Aufspaltung der Messung in relativ kurze Routinen, die zu geeigneten Zeitpunkten abgearbeitet werden können, bevorzugt an bestimmten Drehstellungen des Rotors eines Motors. Die Art der Messung erfolgt hierbei abhängig von einem zuvor ermittelten numerischen Wert für das Tastverhältnis des Signals. Dies gestattet eine Optimierung der Messung, beruhend auf dem Resultat einer vorhergehenden Messung.

Eine besonders vorteilhafte Ausgestaltung einer solchen optimierten Messung ist Gegenstand der Ansprüche 3 und 4. Man kann so eine Messung der Impulsdauer vornehmen, solange ein Impuls lang im Verhältnis zur Periodendauer ist, und man kann eine Messung der Pausendauer zwischen zwei Impulsen vornehmen, solange die Impulsdauer kurz und folglich die Pausendauer lang in Relation zur Periodendauer ist.

Eine besonders vorteilhafte Ausgestaltung ist Gegenstand des Patentanspruchs 5, da man hier eine Schalthysterese erhält, so dass kein häufiges Umschalten zwischen den verschiedenen Messarten erfolgt, was die Messgenauigkeit reduzieren könnte.

Eine weitere Lösung der gestellten Aufgabe ist Gegenstand des Patentanspruchs 16. Eine solche Anordnung ergibt eine sehr einfache und schnell arbeitende Lösung.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen. Es zeigt:

Fig. 1 ein Übersichts-Schaltbild für einen elektronisch kommutierten Motor 30, dem von außen eine periodische Impulsfolge 68 zugeführt wird, deren Tastverhältnis eine Information für den Betrieb des Motors enthält,

Fig. 2 ein Schemabild, welches Interaktionen in einem Motor gemäß Fig. 1 zeigt,

Fig. 3 die Übersichtsdarstellung eines bevorzugten Programmablaufs bei dem Motor nach Fig. 1 und 2,

Fig. 4 eine schematische Darstellung, welche zeigt, welche Abläufe beim Motor nach Fig. 1 abhängig von der Drehstellung des Rotors ablaufen,

Fig. 5 eine Darstellung einer ersten Impulsfolge mit periodisch wiederkehrenden Impulsen der Periodendauer T, und einem Tastverhältnis von ca. 33 %,

Fig. 6 eine Darstellung analog Fig. 5 mit derselben Periodendauer T, aber sehr kurzen Impulsen und einem Tastverhältnis von ca. 5 %,

Fig. 7 eine Darstellung analog Fig. 5 und 6 mit derselben Periodendauer T, aber mit sehr langen Impulsen und einem Tastverhältnis von etwa 93 %,

Fig. 8 eine Darstellung, bei welcher das Signal ständig hoch ist und folglich ein Tastverhältnis von 100 % hat,

Fig. 9 eine Darstellung, bei welcher das Signal ständig niedrig ist und folglich ein Tastverhältnis von 0 % hat,

Fig. 10 ein Schaubild zur Erläuterung der Interrupts, die bei der Vermessung eines Impulses 69 im Normalfall auftreten,

Fig. 11 ein Schaubild zur Erläuterung des Falles, dass ein Impuls so kurz ist, dass nur ein Interrupt am Impulsbeginn möglich ist, nicht aber am Impulsende,

Fig. 12 ein Schaubild zur Erläuterung des Falles, dass eine Impulspause so kurz ist, dass nur ein Interrupt an ihrem Beginn möglich ist, nicht aber an ihrem Ende,

Fig. 13 die Darstellung einer bei der Erfindung in bevorzugter Weise verwendeten Zustandsmaschine,

Fig. 14 eine Darstellung der grundlegenden Abläufe bei der Vermessung und Auswertung von Impulsen,

Fig. 15 eine erweiterte Fassung von Fig. 14, welche die Auswertung von Sonderfällen (PWM = 0 % oder 100 %) und die Behandlung von Fehlern zeigt,

Fig. 16 ein Schaubild, welches grundlegende Abläufe zeigt, die von der Zustandsmaschine registriert und gesteuert werden,

Fig. 17 ein Schaubild, welches zeigt, wie im Normalfall die verschiedenen Zustände der Zustandsmaschine durchlaufen werden,

Fig. 18 das Flussdiagramm einer Interruptroutine, welche durch eine einstellbare Flanke eines Signals ausgelöst wird,

Fig. 19 das Flussdiagramm einer Messroutine Meas. Signal, welche dazu dient, die zeitliche Dauer von impulsförmigen Signalen oder Signalpausen zu bestimmen, und

Fig. 20 das Flussdiagramm einer Routine EVAL, welche dazu dient, die in der Routine nach Fig. 19 erfassten Daten auszuwerten.

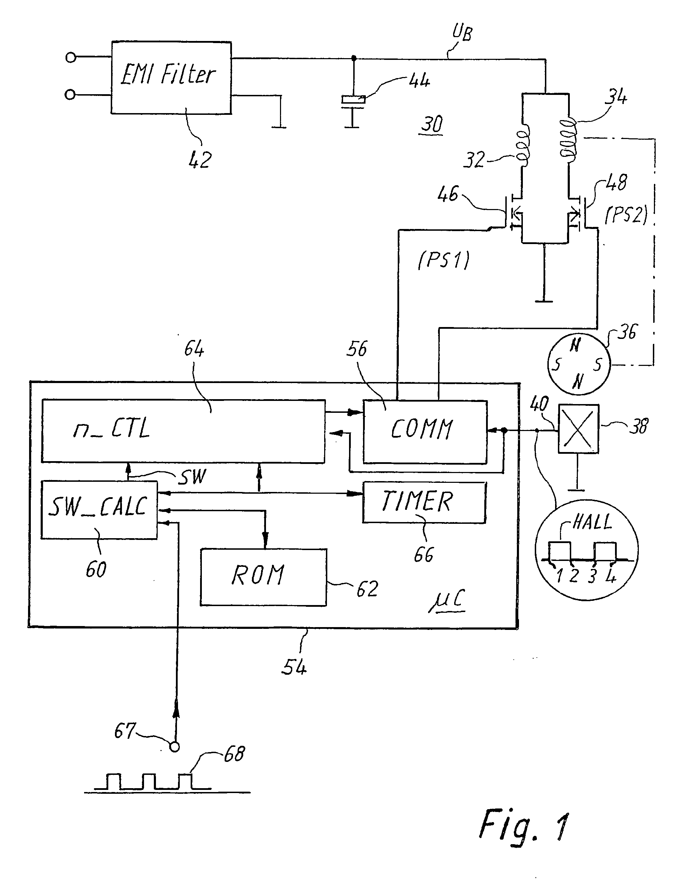

**Fig. 1 z**eigt zur Veranschaulichung der Erfindung einen elektronisch kommutierten Motor (ECM) 30 mit zwei Statorwicklungsphasen 32, 34 und einem permanentmagnetischen Rotor 36, der hier vierpolig dargestellt ist und in dessen Nähe ein Hallgenerator 38 angeordnet ist, der im Betrieb an seinem Ausgang 40 ein rechteckförmiges Signal HALL erzeugt, dessen Flanken beispielhaft mit 1, 2, 3, 4 bezeichnet sind.

Zur Versorgung mit einer Gleichspannung $U_B$ hat der Motor 30 ein EMI-Filter 42 und einen Siebkondensator 44. In Reihe mit dem Strang 32 liegt ein Transistor 46, der als erste Endstufe (PS1) dient, und in Reihe mit dem Strang 34 liegt ein Transistor 48, der als zweite Endstufe (PS2) dient. Ist der Transistor 46 eingeschaltet, so erhält der Strang 32 Strom. Ist der Transistor 48 eingeschaltet, so erhält der Strang 34 Strom.

Zur Steuerung der Transistoren 46, 48 dient ein Mikrocontroller ($\mu$C) 54. In diesem sind symbolisch verschiedene Module dargestellt, u.a. ein Modul 56 für die Kommutierung, ein ROM 62 (innerhalb oder außerhalb des $\mu$C 54) zur Speicherung des Programms für den Motor 30, ein Modul n_CTL 64 für die Drehzahlregelung, das über das Modul 56 die Drehzahl des Motors 30 regelt, ferner ein Modul SW_CALC 60 für die Berechnung des Sollwerts SW, der dem Regler 64 zugeführt wird. Der aktuelle Wert der Drehzahl wird dem Regler 64 in Gestalt des Signals HALL zugeführt, ebenso den Modulen 56 und 64. Ferner enthält der $\mu$C 54 einen Timer 66, den man sich als eine Uhr vorstellen kann, welche zu jedem gewünschten Zeitpunkt eine sogenannte Basiszeit liefert. Dieser arbeitet mit den Modulen 60 und 64 zusammen.

Gemäß Fig. 1 wird ein Sollwert dem $\mu$C 54 von außen an einem Eingang 67 als periodische Impulsfolge 68 zugeführt, und die Information über die gewünschte Drehzahl (SW) ist im Tastverhältnis der Impulse 68 enthalten. Dies wird nachfolgend ausführlich erläutert.

Wie sich aus der Darstellung gemäß Fig. 1 ergibt, muss der $\mu$C 54 zwei verschiedene Impulsfolgen verarbeiten, nämlich einmal die Impulsfolge HALL, und zum anderen die Impulsfolge 68. Da die Impulsfolge HALL für den Lauf des Motors kritisch ist, hat ihre Verarbeitung gewöhnlich Vorrang vor der Verarbeitung der Impulsfolge 68, doch darf die Verarbeitung der Impulsfolge 68 an gewissen kritischen Stellen nicht unterbrochen werden, und dann erhält die Impulsfolge 68 Vorrang.

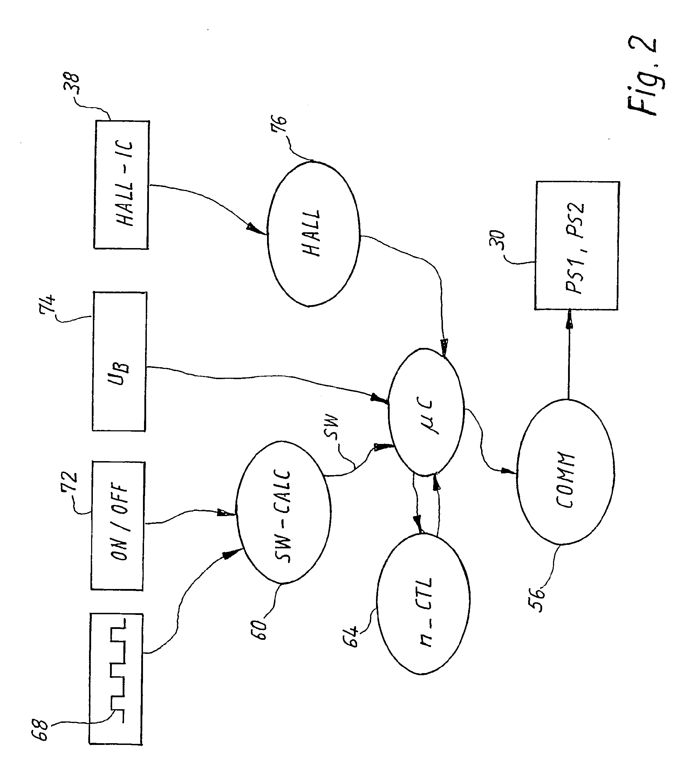

Fig. 2 zeigt, wie bei einem solchen Motor die einzelnen Funktionen ineinander greifen. Bei 68 wird die Impulsfolge 68 zugeführt und in dem Modul 60 verarbeitet, so dass man den Wert SW erhält. Bei 72 werden die Signale ON/OFF für das Einschalten oder Ausschalten des Motors 30 zugeführt, und diese laufen ebenfalls über das Modul 60. Bei 74 wird die Betriebsspannung UB zugeführt, und diese kann z.B. in der Weise berücksichtigt werden, dass bei zu niedriger Betriebsspannung der Motor abgeschaltet wird, oder dass bei zu hoher Betriebsspannung bestimmte Veränderungen im Programm vorgenommen werden. Bei 38 ist der Hall-IC 38 dargestellt, der das Signal HALL erzeugt, und dieses wird in einem Verarbeitungsmodul 76 verarbeitet und liefert Informationen über die augenblickliche Stellung und Drehzahl des Rotors 36.

Schließlich ist das Kommutierungsmodul 56 vorgesehen, welches die beiden Endstufen PS1, PS2 im Motor 30 steuert.

Fig. 2 zeigt, dass zwischen den einzelnen Modulen Interaktionen bestehen, die ggf. bei der Ausformung des Programms berücksichtigt werden müssen, sofern dieses in einem ECM verwendet wird.

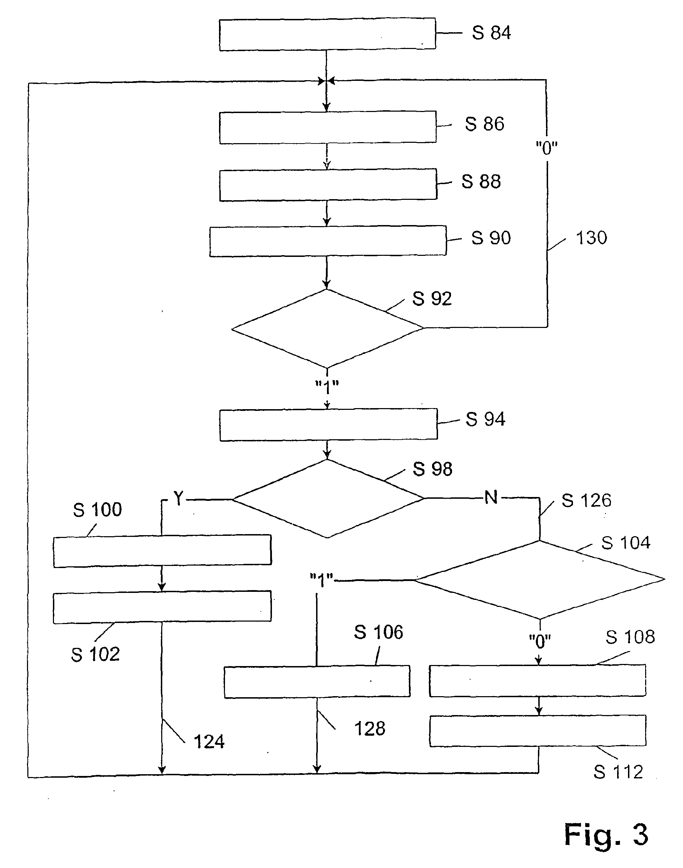

Fig. 3 zeigt einen typischen Grundaufbau des Programms, wie es zur Steuerung der diversen Funktionen des Motors 30 verwendet wird. Im Schritt S84 (Power On Initialisierung) erfolgt eine Initialisierung beim Einschalten, bei der verschiedene Parameter auf Eingangswerte gesetzt werden. Im Schritt S86 (Watchdog zurücksetzen) wird der Watchdog des Rechners zurückgesetzt, und im Schritt S88 (Reinitialisierung) erfolgt bei jedem Durchlauf eine Reinitialisierung bestimmter Werte, um einen Absturz des $\mu$C 54 zu vermeiden. Bei S90 (Kommutierungssteuerung) wird die Kommutierung gesteuert, und im Schritt S92 (Flag_DoFcts ?) wird ein Flag abgefragt, und wenn dieses den Wert 0 hat, geht das Programm zurück zu S86. Wenn es den Wert 1 hat, wird dieses Flag im Schritt S94 (Flag_DoFcts = 0) auf 0 gesetzt. Im anschließenden Schritt S98 (Hall_CNT "gerade" ?) wird abgefragt, ob der Hallzähler gerade oder ungerade ist. Hierzu wird auf die Darstellung des Signals HALL in Fig. 1 Bezug genommen. Wie dort dargestellt, wird bei jeder Änderung dieses Signals ein Zähler um einen Wert weitergezählt, also z.B. in der Folge 1-2-3-4-1-2-3-4, und wenn der Zähler einen geraden Wert hat, wird in S100 (Sollwerterfassung) ein Teil der Sollwertberechnung SW_CALC durchgeführt und anschließend im Schritt S102 (Flag_Istwert_erfasst = 0) ein Flag für die Erfassung des Istwerts auf Null gesetzt. Anschließend geht das Programm zurück zum Schritt S86.

Ist in S98 die Antwort Nein, so geht das Programm zum Schritt S104 (Flag_Istwert_erfasst ?), wo abgefragt wird, ob das Flag für den Istwert den Wert 1 oder 0 hat. Hat es den Wert 1, so geht das Programm zum Schritt S106 (Sollwerterfassung), wo ein Teil der Berechnung SW_CALC durchgeführt wird, und ist die Antwort in S104 0, so wird in S108 (Istwerterfassung) die aktuelle Drehzahl erfasst, indem das Signal HALL ausgewertet wird. Anschließend wird in S112 (Flag_Istwert_erfasst = 1) das Flag für den Istwert auf 1 gesetzt, um anzuzeigen, dass der Istwert erfasst ist und beim nächsten Durchlauf durch S104 der Schritt S106 (Berechnung des Sollwerts) durchgeführt werden kann.

Das Schaubild zeigt, dass die Berechnung des Sollwerts auf die Schritte S100 und S106 verteilt ist, weil die Berechnung des Sollwerts in diesem Fall ziemlich viel Zeit erfordert und ohne diese Aufteilung mit der sonstigen Funktion des Motors nicht kompatibel wäre.

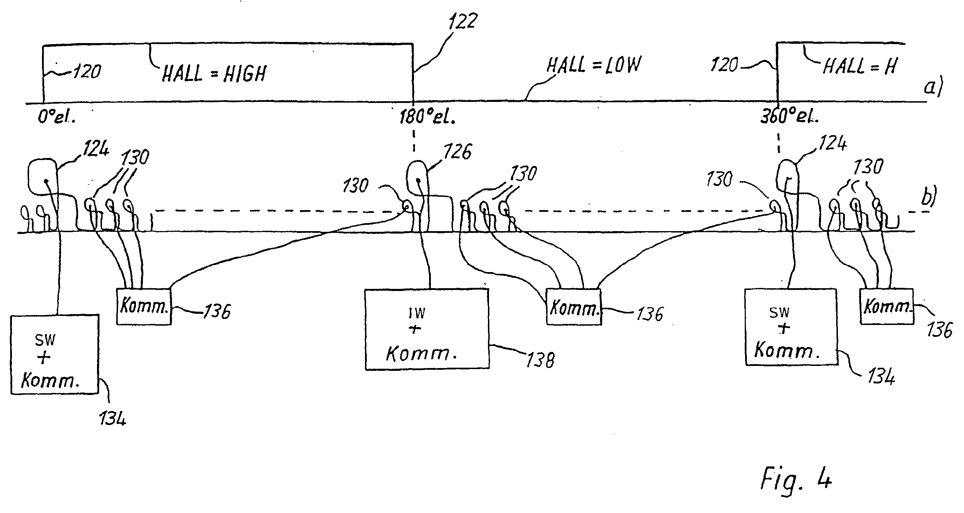

Fig. 4 zeigt in einer Übersichtsdarstellung den Ablauf der Programmschritte im Motor 30 abhängig von der Drehstellung des Rotors 36. Ein Elektromotor, der durch einen $\mu$C 54 gesteuert wird, kann vielerlei zusätzliche Funktionen haben, je nach seiner Verwendung, z.B. eine Drehzahlregelung, eine Drehzahlbegrenzung, eine Strombegrenzung, eine Regelung auf konstanten Strom, Anordnungen zur Ausgabe von Alarmsignalen, Fehlerbehandlungsroutinen, etc.

Beim vorliegenden Ausführungsbeispiel wird die Drehzahl des Motors 30 auf einen Sollwert geregelt, z.B. auf 3000 U/min. Deshalb muss dieser Sollwert für das Regelungsprogramm in relativ kurzen Abständen aktualisiert werden.

Ferner muss man für eine Drehzahlregelung wissen, wie hoch die Drehzahl des Motors im Augenblick ist, z.B. 2990 U/min. Auch dieser Istwert der Drehzahl muss in relativ kurzen Abständen aktualisiert werden.

Ferner müssen bestimmte Parameter von Zeit zu Zeit neu initialisiert werden, um einen stabilen Lauf des Motors sicherzustellen, und der μC 54 muss entsprechend den Berechnungen des Drehzahlreglers den Strom zum Motor 30 ein- und ausschalten und auch, abhängig von der augenblicklichen Drehstellung, die Richtung des Motorstroms umschalten. Alle diese Vorgänge bezeichnet man im Elektromaschinenbau als Kommutierung. Diese sollte mit großer Präzision erfolgen, weil ein Motor nur ruhig läuft, wenn die Kommutierungsbefehle sehr exakt ausgeführt werden. Dies bedeutet, dass das Programm sehr häufig prüfen muss, ob ein Programmbefehl für die Kommutierung vorliegt und ausgeführt werden muss.

Fig. 4a zeigt den Verlauf des Signals HALL, und Fig. 4b zeigt symbolisch, welche Schleifen vom Programm durchlaufen werden.

Gemäß Fig. 4 hat man direkt nach einer Flanke 120, 122 des Signals HALL eine große Rechenschleife 124, 126, 128 (Fig. 3), in der - je nach dem Wert des Zählers HALL_CNT längere Rechenprozeduren ausgeführt werden, und man hat anschließend viele kurze Rechenschleifen 130, in denen nur die Kommutierung geprüft und ggf. gesteuert wird. Da diese kurzen Schleifen 130 nur sehr wenige Schritte enthalten und deshalb sehr dicht aufeinander folgen, ergeben sie eine hohe Auflösung, d.h. es wird z.B. alle 60 bis 100 μs geprüft, ob an der Kommutierung etwas geändert werden muss.

Fig. 4 zeigt, dass z.B. direkt nach einer ansteigenden Flanke 120 des Signals HALL eine lange Schleife 124 ausgeführt wird, in der gemäß Legende 134 der Sollwert (SW) für das Regeln der Drehzahl berechnet und auch die Kommutierung überprüft wird.

An die große Schleife 124 schließen sich viele kurze Schleifen 130 an, in denen gemäß Legende 136 nur die Kommutierung geprüft und ggf. verändert wird.

Auf eine abfallende Flanke 122 des Signals HALL folgt bei diesem Beispiel eine lange Schleife 126, in der gemäß Legende 138 folgende Rechenschritte ausgeführt werden:

- Istwertberechnung (IW)
- Kommutierung (Komm.).

Auf diese lange Schleife 126 folgen wieder die kurzen Schleifen 130 für die Überwachung und Steuerung der Kommutierung.

Bei der nächsten ansteigenden Flanke 120 des Signals HALL folgt wieder eine lange Schleife 124 der bereits beschriebenen Art. Auf diese Weise werden jeweils im Bereich der Hallflanken 120, 122, also an bestimmten Rotorstellungen, bestimmte Werte ermittelt, so dass z.B. bei einem vierpoligen Rotor 36 im Verlauf einer vollen Umdrehung zweimal eine Sollwertberechnung und zweimal eine Istwertberechnung erfolgen. Wie sich aus Fig. 3 ergibt, kann dann, wenn in Schritt S98 der Zähler HALL_CNT ein ungerades Resultat hat, entweder die Schleife 126 oder die Schleife 128 durchlaufen werden, je nachdem, ob beim vorhergehenden Durchlauf im Schritt S112 das dortige Flag auf 1 gesetzt wurde. Auf diese Weise verteilen sich die Rechenoperationen zeitlich, und die Verteilung wird unter anderem durch die Stellung des Rotors 36 gesteuert.

Diese rotorstellungsabhängige Erfassung von Werten ist bei einem Motor deshalb möglich, weil sich im Verlauf einer Rotorumdrehung die Drehzahl gewöhnlich nur wenig ändert.

**Fig. 5** zeigt eine vergrößerte Darstellung des Signals 68 der Fig. 1, mittels dessen dem Regler n_CTL 64 die gewünschte Drehzahl mitgeteilt wird. Dieses Signal 68 hat Impulse 69 und Impulspausen 70. Da es einen periodischen Verlauf hat, hat es eine Periodendauer T, die z.B. 1 ms = 0,001 s betragen kann, und in diesem Fall hat das Signal 68 eine Frequenz von 1/0,001 = 1000 Hz. Die Länge der Impulse 69 ist mit t bezeichnet, und die Länge der Impulspausen mit t'. Es gilt dann

$$T = t + t' \qquad\qquad\qquad ...\ (1)$$

**Fig. 6** zeigt, dass die Impulse 69 sehr kurz werden können, wodurch sich lange Impulspausen 70 ergeben, und **Fig. 7** zeigt umgekehrt, dass die Impulse 69 sehr lang und folglich die Impulspausen 70 sehr kurz werden können.

Gemäß **Fig. 8** kann das Signal 68 auch ständig den Wert HIGH haben, was einem Tastverhältnis von 100 % entspricht, und umgekehrt kann das Signal 68 gemäß **Fig. 9** auch ständig den Wert LOW haben, entsprechend einem Tastverhältnis von 0 %.

Alle Fälle gemäß Fig. 5 bis 9 müssen von der Software richtig interpretiert werden.

In jedem Fall muss bei den Fällen gemäß Fig. 5 bis 7 die Periodendauer T gemessen werden. In den Fällen der Fig. 8 und 9 ist die Periodendauer T = ∞, und dies muss vom Programm korrekt interpretiert werden.

In dem Fall gemäß Fig. 7 wird gemäß der vorliegenden Erfindung zusätzlich zu T der Wert t gemessen, also die Länge der Impulse 69, welche in diesem Fall nicht viel kleiner ist als T.

Bei Fig. 6 sind die Impulse 69 sehr kurz und deshalb schwierig zu messen, weil die Messung der Impulse dadurch erfolgt, dass mittels des Timers 66 (Fig. 1) bei einem Impuls jeweils durch einen ersten Interrupt der Zeitpunkt der ansteigenden Flanke und durch einen zweiten Interrupt der Zeitpunkt der abfallenden Flanke des Impulses 69 gemessen und die Differenz zwischen diesen beiden Zeitpunkten ermittelt wird. Da jeder Interrupt eine bestimmte Zeit erfordert, z.B. 30 $\mu$s, ist dies schwierig, wenn die Impulsdauer t sehr kurz ist, und die Messung wird dann sehr ungenau oder sogar unmöglich.

Gemäß der Erfindung wird deshalb bei kurzen Impulsen 69 (wie in Fig. 5 und 6 dargestellt) die Zeit t' für eine Impulspause gemessen und berechnet, und aus dieser Zeit wird gemäß der Formel

$$t = T - t' \qquad\qquad ...(2)$$

die Impulsdauer t indirekt berechnet.

Da beim Einschalten des Motors 30 die Impulse 69 in jedem Fall lang sind, wird bei der Initialisierung nach dem Einschalten ein FlagPM (= Pulsmessung), welches die Art der Messung festlegt, auf FlagPM = 1 gesetzt, was eine Messung der Impulsdauer t bedeutet, und es wird anschließend ständig das Verhältnis t/T (oder alternativ t'/T) überwacht, und wenn das erstgenannte Verhältnis unter 46 % sinkt, wird FlagPM = 0 gesetzt, um auf Messung der Zeitdauer t' der Impulspause 70 umzuschalten.

Umgekehrt wird dann, wenn FlagPM = 0 ist, überprüft, ob das Verhältnis t/T größer als 51 % wird, und in diesem Fall wird FlagPM = 1 gesetzt und es wird die Impulsdauer t gemessen. Der Unterschied zwischen 46 und 51 % bewirkt eine Hysterese, d.h. bei einem Verhältnis t/T von 50 % wird entweder die Impulsdauer oder die Dauer der Impulspause gemessen, und die Art der Messung ändert sich erst dann, wenn entweder der Wert von 51 % überschritten oder der Wert von 46 % unterschritten wird. Selbstverständlich sind die Zahlen 46 und 51 nur Beispiele, die zum besseren Verständnis der Erfindung angegeben werden.

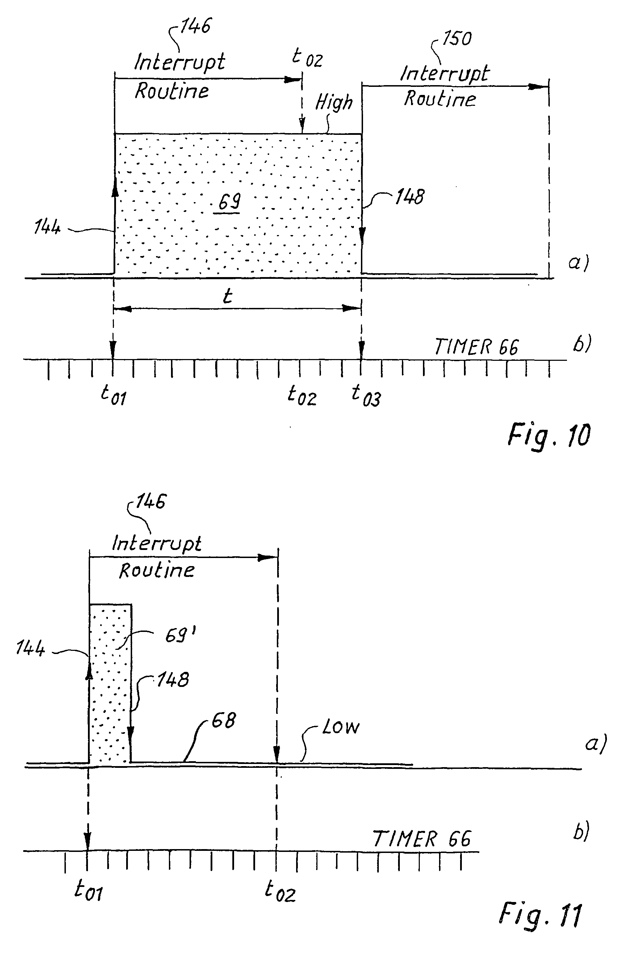

**Fig. 10** und Fig. 11 erläutern ein Problem, das bei der Vermessung von Impulsen auftritt. Fig. 10 zeigt einen Impuls 69. Dieser hat eine ansteigende Flanke 144, und zeitlich vor dieser Flanke wird bei einer Messung der Impulsdauer t die Empfindlichkeit des Eingangs 67 (Fig. 1) des $\mu$C 54 so eingestellt, dass dort die ansteigende Flanke eines Signals einen Interrupt 146 auslöst, der im TIMER 66 zu einer Messung der Zeit $t_{01}$ führt.

Ein Interrupt besteht aus einer Mehrzahl von Befehlen, und eine solche Interruptroutine benötigt zu ihrer Abarbeitung eine bestimmte Zeitdauer, die z.B. zum Zeitpunkt $t_{02}$ endet. Sie dauert z.B. zwischen 60 und 100 $\mu$s.

In Fig. 10 wird zum Zeitpunkt $t_{02}$ geprüft, ob der Eingang 67 hoch oder niedrig ist. In diesem Fall ist der Eingang hoch, d.h. der Impuls 69 ist noch nicht zu Ende. Deshalb wird zum Zeitpunkt $t_{02}$ die Empfindlichkeit des Eingangs 67 so umgeschaltet, dass bei der nun folgenden fallenden Flanke 148 ein Interrupt 150 ausgelöst wird, der im Timer 66 die Messung des Zeitpunkts $t_{03}$ bewirkt.

Anschließend wird dann die Länge des Impulses 68 berechnet ($t = t_{03} - t_{02}$). Dies ist also eine Messung bei Impulsen 69, die länger sind als die Interruptroutine 146. Die Abfrage des Eingangs 67 zum Zeitpunkt $t_{02}$ bestätigt, dass der Impuls 69 noch andauert und deshalb anschließend sein Ende gemessen werden kann.

**Fig. 11** zeigt die analoge Situation bei einem sehr kurzen Impuls 69', der kürzer ist als die Interruptroutine 146, also z.B. nur 30 $\mu$s. Auch in diesem Fall wird vor der ansteigenden Flanke 144 die Empfindlichkeit des Eingangs 67 so eingestellt, dass bei der Flanke 144 ein Interrupt 146 ausgelöst und der Zeitpunkt $t_{01}$ gemessen wird.

Ebenso wird auch hier am Ende der Interruptroutine 146, also zum Zeitpunkt $t_{02}$, der Eingang 67 abgefragt, und dabei wird festgestellt, dass dieser Eingang den Wert Low hat. Dies bedeutet, dass der Impuls 69' bereits zu Ende ist, dass deshalb der Wert $t_{03}$ nicht gemessen werden kann, und dass auf Messung der Impulspause t' umgeschaltet werden muss, d.h. es wird hier gesetzt

$$\text{FlagPM} = 0,$$

und diese Messung wird nicht verwertet.

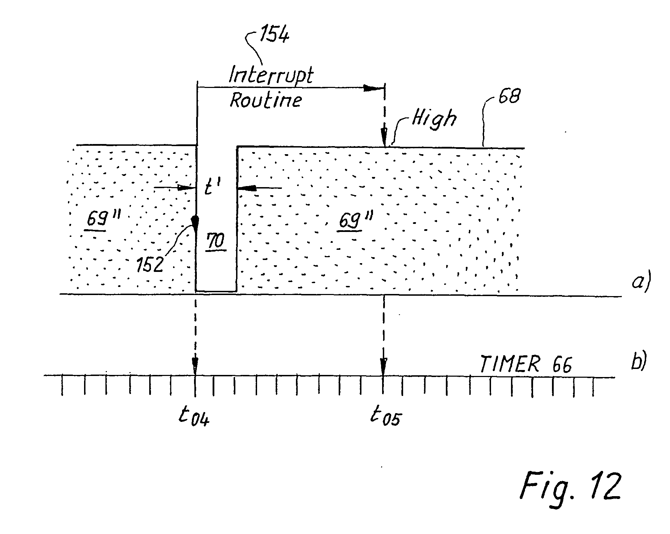

**Fig. 12** zeigt den zu Fig. 11 analogen Fall der Messung einer sehr kurzen Impulspause 70, deren Dauer t' kürzer ist als die der Interruptroutine.

In diesem Fall wird die Empfindlichkeit des Eingangs 67 so eingestellt, dass die fallende Flanke 152 am Beginn der Impulspause 70 einen Interrupt 154 auslöst, der länger dauert als die Impulspause 70. Dieser Interrupt 154 endet zum Zeitpunkt tos, und zu diesem Zeitpunkt wird das Signal am Eingang 67 abgefragt, das zu diesem Zeitpunkt hoch ist. Dies bedeutet, dass die Impulspause bereits zu Ende ist und deshalb nicht gemessen werden kann. Deshalb wird die Messung verworfen, und es wird umgeschaltet auf FlagPM = 1, also Messung der Impulsdauer. Wäre dagegen in Fig. 12 zum Zeitpunkt tos der Eingang 67 niedrig, so würde die Impulspause 70 noch nicht zu Ende sein und würde dadurch gemessen, dass bei der auf die fallende Flanke 152 folgenden ansteigenden Flanke ein neuer Interrupt mit einer Zeitmessung ausgelöst würde.

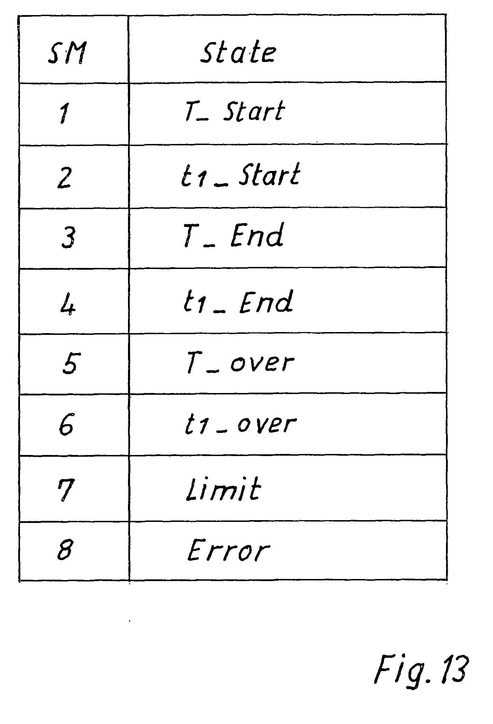

**Fig. 13** zeigt eine sogenannte Zustandsmaschine (State Machine), die beim vorliegenden Ausführungsbeispiel verwendet wird. Dies ist eine Variable, nämlich ein Register im RAM des $\mu$C 54, das hier die Werte 1 bis 8 annehmen kann. Je nach der Routine, die gerade ausgeführt wird, hat dieses Register verschiedene Werte, die im Programm abgefragt werden können. Die einzelnen Zustände der Fig. 13 haben folgende Bedeutung:

Zustand 1 "T_Start". Dies bedeutet, dass der erste Interrupt für die Erfassung der Periodendauer T erwartet wird.

Zustand 2 "t1_Start". Dies bedeutet, dass der erste Interrupt für die Impulserfassung (Flanke 144 der Fig. 10, Flanke 152 der Fig. 12) erwartet wird. Dies kann also sowohl die Erfassung eines Impulses wie die Erfassung einer Impulspause sein.

Zustand 3 "T_End". Dies bedeutet, dass der zweite Interrupt für die Erfassung der Periodendauer T erwartet wird, also in Fig. 5 der Interrupt an der Stelle 156.

Zustand 4 "t1_End". Dies bedeutet, dass der zweite Interrupt für die Erfassung der Impulsdauer (Interrupt 148 in Fig. 10) erwartet wird, oder der zweite Interrupt für die Erfassung der Pausendauer.

Zustand 5 "T_Over". Dies bedeutet, dass die Erfassung der Periodendauer T abgeschlossen ist, und dass jetzt die Erfassung der Impulsdauer t oder die Erfassung der Pausendauer t' folgt.

Zustand 6 "t1 _Over". Dies bedeutet, dass die Erfassung der Impulsdauer (t in Fig. 7) oder die Erfassung der Pausendauer (t' in Fig. 6) abgeschlossen ist, und dass jetzt die Auswertung der gemessenen Daten folgt.

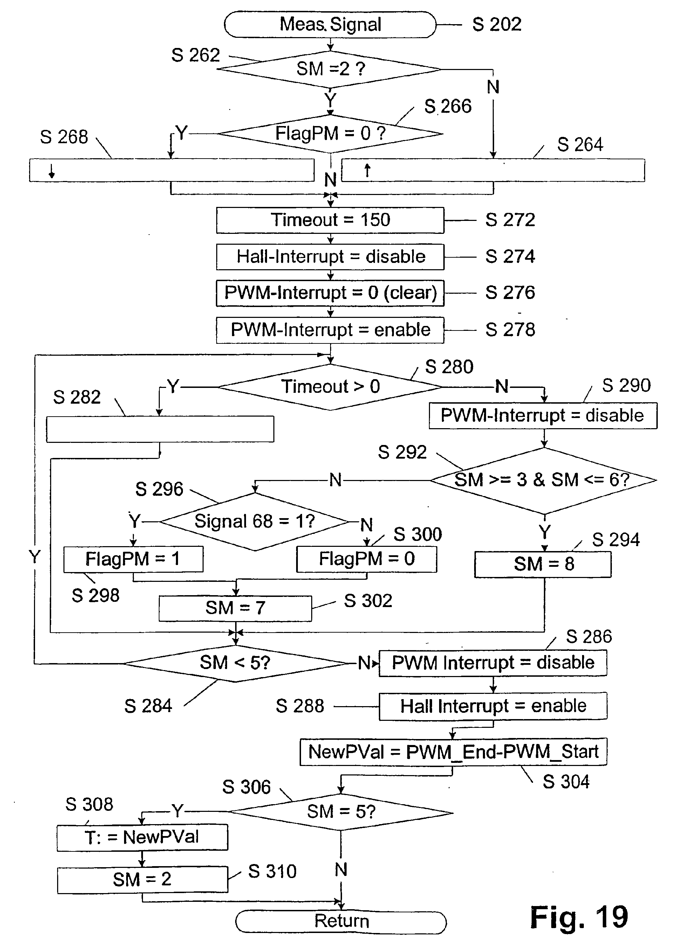

Zustand 7 "Limit". Dies bedeutet, dass das Signal 68 keine Flanken enthält, wie in Fig. 8 und 9 dargestellt, so dass keine Interrupts erzeugt werden. Das Signal 68 ist dann entweder statisch High (Fig. 8) oder statisch Low (Fig. 9). Dieser Zustand wird in Fig. 19 in den Schritten S296 bis S300 bearbeitet, und deshalb wird anschließend in S302 gesetzt SM = 7.

Zustand 8 "Error". Dies bedeutet einen Erfassungsfehler bei der Erfassung der Impulsdauer, wie er bei Fig. 11 beschrieben wurde, oder einen Erfassungsfehler bei der Erfassung der Pausendauer, wie er bei Fig. 12 beschrieben wurde, d.h. nur einer der beiden Interrupts, die zu einer Messung gehören, konnte erfasst werden. Dagegen trat beim zweiten Interrupt ein Fehler auf wie folgt:

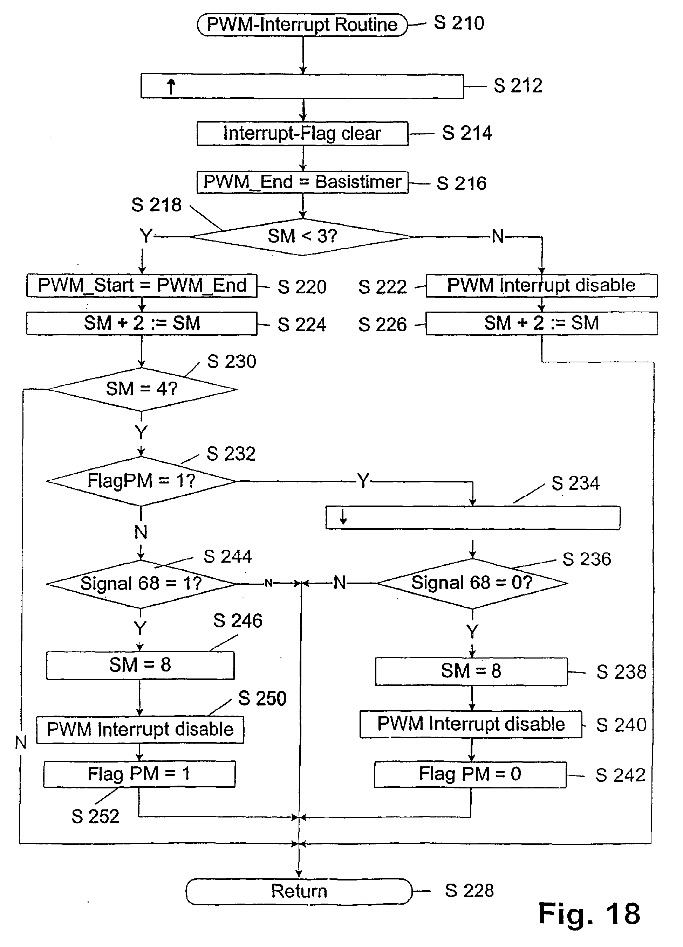

a) Entweder war der Impuls zu kurz, so dass der zweite Interrupt nicht erfasst werden konnte, wie bei Fig. 11 und Fig. 12 beschrieben. Dieser Zustand wird in Fig. 18 bei S232, S234, S236, S244 bearbeitet. Anschließend wird in S238 oder S246 SM = 8 gesetzt, und die Messart wird automatisch umgeschaltet (S242, S252 in Fig. 18).
b) Oder der zweite Interrupt kommt zu spät (nach Ablauf der Zeit Timeout in Fig. 19), so dass er ebenfalls nicht erfasst werden konnte, und dann wird in Fig. 19, S294, SM = 8 gesetzt, und die Messung wird verworfen und neu gestartet.

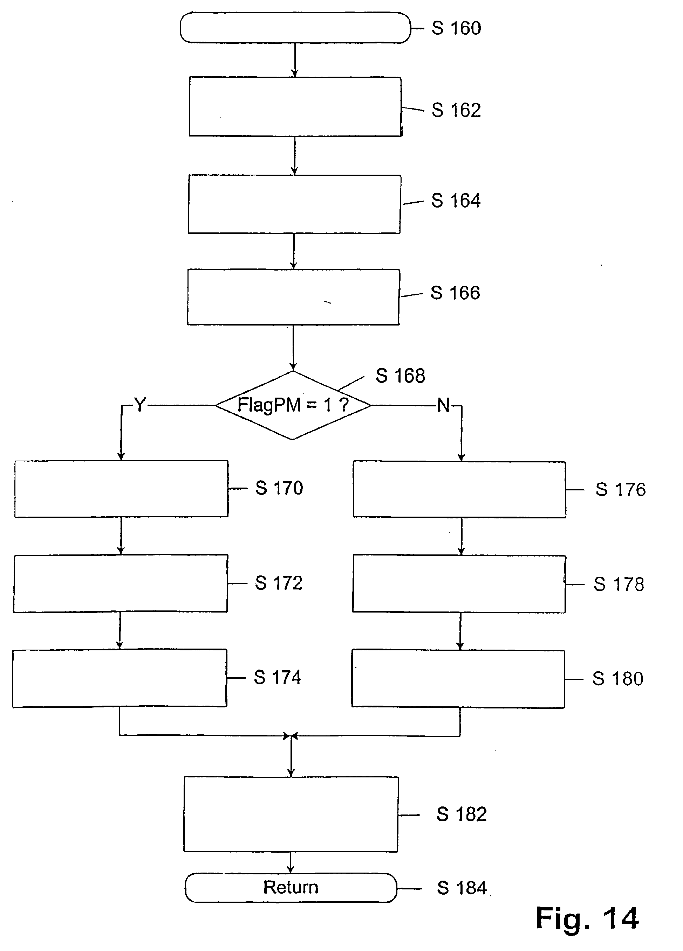

**Fig. 14** zeigt den prinzipiellen Ablauf der Routine S160 (digitale PWM Erfassung). Bei S162 (Periodendauer Startflanke abwarten "1 ") befindet sich das Programm im Zustand 1 und wartet die Startflanke für die Messung der Periodendauer T ab, also in Fig. 5 die Flanke 144.

Bei S164 (Periodendauer Ende abwarten "3") befindet sich das Programm im Zustand 3 und wartet die Flanke 156 (Fig. 5) ab, also das Ende der Periodendauer T.

Bei S166 (Periodendauer erfolgreich erfasst "5") geht anschließend das Programm in den Zustand SM = 5, der bedeutet, dass die Periodendauer T erfolgreich erfasst wurde.

Bei S168 (FlagPM = 1) wird abgefragt, welchen Wert das FlagPM hat. Ist dieser Wert 1, so geht das Programm bei S170 (Pulsbreite Startflanke abwarten "2") in den Zustand 2, d.h. die Startflanke (144 in Fig. 10) eines Impulses 69 wird erwartet.

Anschließend geht das Programm zu S172 (Pulsbreite Ende abwarten "4"), also dem Zustand 4, und dort wird die Flanke 148 (Fig. 10) abgewartet, also das Ende des Impulses 69.

Anschließend geht das Programm zu S174 (Pulsbreite erfolgreich erfasst "6"), also in den Zustand 6, d.h. die Impulsbreite t wurde erfolgreich erfasst.

Ist in S168 die Antwort Nein, so erfolgt eine Messung der Pausendauer t'. In diesem Fall geht in S176 (Pausendauer Startflanke abwarten "2") das Programm in den Zustand 2, d.h. die Startflanke 152 (Fig. 12) wird erwartet.

Anschließend geht das Programm in S178 (Pausendauer Ende abwarten "4") in den Zustand 4, und dort wird das Ende der Impulspause abgewartet, z.B. in Fig. 5 die Flanke 156.

Danach geht das Programm in S180 (Pausendauer erfolgreich erfasst "6") in den Zustand 6, d.h. die Pausendauer t' wurde erfolgreich erfasst.

Im Anschluss an die Erfassung der Impulsbreite t (S174), oder der Pausendauer t' (S180) geht das Programm zu S182 (Berechnungen: Tastverhältnis etc.), wo die notwendigen Berechnungen erfolgen, also z.B. die Berechnung des Wertes t/T, den man als das Tastverhältnis des Signals 68 bezeichnet, oder die Frequenz des Signals 68 am Eingang 67. Danach folgt Return im Schritt S184.

Die Zustandsmaschine gemäß Fig. 13 und 14 ist so aufgebaut, dass als erstes in den Zuständen 1, 3 und 5 die Periodendauer T erfasst wird, danach in den Zuständen 2, 4 und 6 entweder die Impulsdauer t oder die Pausendauer t', und danach in S182 die diversen Berechnungen erfolgen. Das Sollwertmodul, wie es im Prinzip in Fig. 14 dargestellt ist, wird deshalb in Fig. 3 bei S100 und bei S106 aufgerufen, und es muss insgesamt dreimal aufgerufen werden, bis ein neuer gültiger Sollwert vorliegt. Dies wird deshalb so gemacht, damit die Rechenzeit dieses Moduls, die ziemlich groß ist, in kleinere, handliche Portionen unterteilt wird, die bei der Kommutierung des Motors 30 nicht stören. Falls auf die Kommutierung eines Motors keine Rücksicht genommen werden muss, ist selbstverständlich eine solche Unterteilung nicht erforderlich.

Wie man Fig. 14 entnimmt, ist erst nach Abarbeitung der Zustände 1-3-5 UND der Zustände 2-4-6 die Datenerfassung abgeschlossen. Befindet sich z.B. die Zustandsmaschine (Fig. 13) im Zustand 1 oder 2, so ist die Datenerfassung noch nicht abgeschlossen, und eine Erfassungsfunktion muss durchgeführt werden. Erst wenn keine Erfassung mehr durchgeführt werden muss, ist der Wert der Zustandsmaschine größer als 2. Mit den Werten 3 oder 4 kann die Zustandsmaschine nicht verlassen werden. Sie endet vielmehr in einem der Zustände 6, 7 oder 8, weil in Fig. 19, S310, der Zustand SM = 5 automatisch auf SM = 2 umgeschaltet wurde, damit beim nächsten Durchlauf - je nach dem Wert von FlagPM - entweder die Pulserfassung oder die Pausenerfassung starten kann.

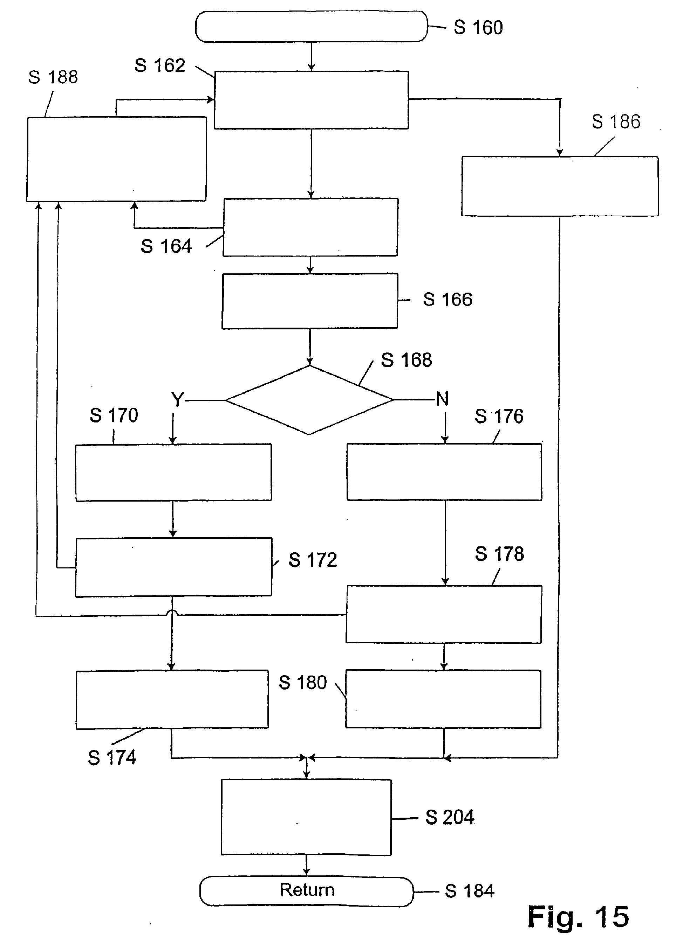

Fig. 14 zeigt nur den Grundaufbau der Messung. **Fig. 15** ist eine etwas ausführlichere Darstellung, in der auch die Zustände 7 und 8 dargestellt sind. Die Schritte S160 bis S184 sind identisch mit Fig. 14 und werden gleich bezeichnet wie dort und nicht nochmals beschrieben.

Wenn in S162 festgestellt wird, dass innerhalb einer vorgegebenen Zeit keine Flanke gemessen werden kann (PWM Pulsbreite ist entweder 0 % oder 100 %), geht das Programm bei S186 (Limit Signal ohne Flanken "7") in den Zustand 7, d.h. es liegt entweder der Fall gemäß Fig. 8 vor, und in S182 wird dann das Tastverhältnis auf 100 % gesetzt, oder es liegt der Fall gemäß Fig. 9 vor, und in diesem Fall wird in S182 das Tastverhältnis auf 0 % gesetzt.

Kommt in S164 (Periodendauer Ende abwarten "3") der Interrupt für das Ende der Periodendauer T (Interrupt 156 der Fig. 5) überhaupt nicht oder zu spät, so geht das Programm zu S188 (Erfassungsfehler, 2. Interrupt fehlt oder zu spät "8"), also zum Zustand 8. Die Messung wird verworfen, und das Programm beginnt bei S162 (Periodendauer Startflanke abwarten "1") im Zustand 1 eine neue Messung.

Dasselbe geschieht, wenn in S172 (Pulsbreite Ende abwarten "4") oder S178 (Pausendauer Ende abwarten "4") der zweite Interrupt fehlt oder zu spät kommt. Auch in diesem Fall wird die Messung verworfen, das Programm geht zurück an den Start bei S162 (Periodendauer Startflanke abwarten "1 ") und beginnt eine neue Messung, und der bisherige Messwert wird weiterhin verwendet, bis ein neuer vorliegt.

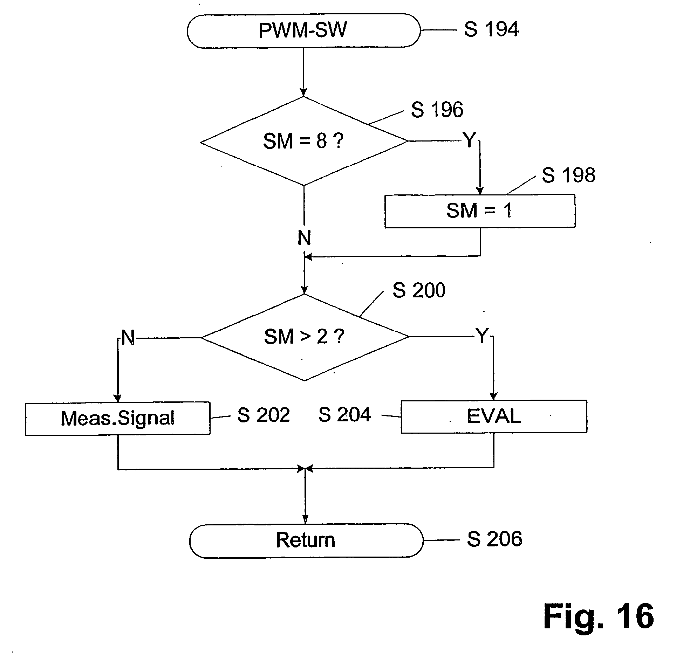

**Fig. 16** zeigt die einfache Grundstruktur des Programms, die sich mit Hilfe der Zustandsmaschine erreichen lässt. Nach dem Anfang S194 wird im Schritt S196 abgefragt, ob der Zustand 8 (Error) vorliegt, der in Fig. 15 bei S188 dargestellt ist und dort beschrieben wurde. Falls ein Fehler vorliegt, wird die Messung verworfen, und eine neue Messung beginnt, d.h. das Programm geht bei S198 zum Zustand SM = 1 der Zustandsmaschine und wartet die Startflanke für die Messung der Periodendauer T ab, was in Fig. 15 mit S162 bezeichnet ist.

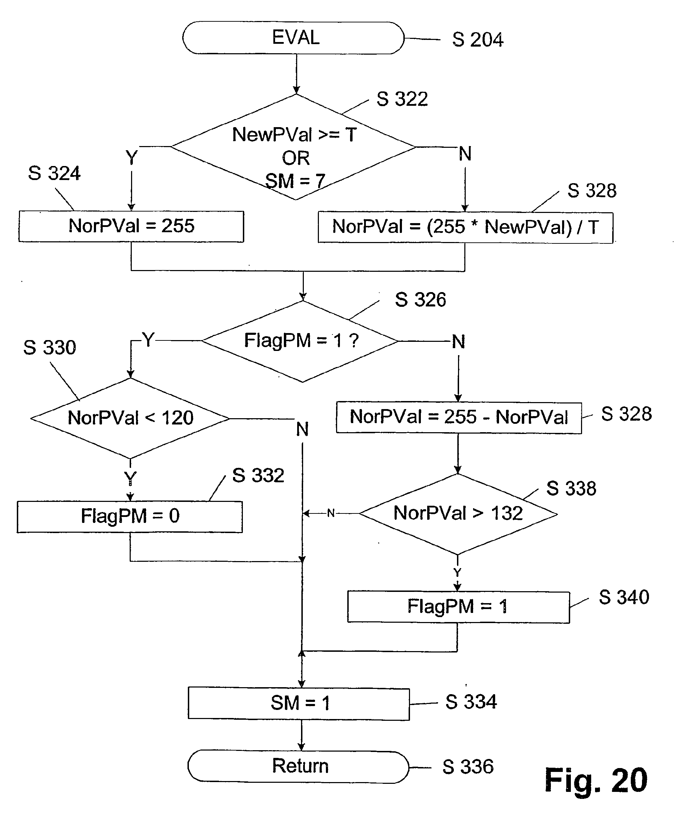

Wird im Schritt S196 kein Fehler festgestellt, so geht das Programm zum Schritt S200, wo abgefragt wird, ob ein Zustand größer 2 vorliegt. Der Zustand 1 oder 2 bedeutet, dass noch mindestens eine der Messungen gestartet werden muss, und dass folglich die Messung des Signals 68 noch nicht abgeschlossen ist, und falls die Antwort Nein ist, wird deshalb im Modul S202 (Fig. 19) die Messung des Signals durchgeführt. Lautet dagegen in S200 die Antwort Ja, so bedeutet dies, dass keine Messung mehr gestartet werden muss, und im anschließenden Modul S204 EVAL (Fig. 20) werden die gemessenen Daten ausgewertet. Auf die Module S202 oder S204 folgt der Schritt S206 Return.

Wie bereits erläutert, kann die Zustandsmaschine nicht mit den Werten SM = 3 oder 4 verlassen werden, sondern sie endet stets in einem der Zustände 6, 7 oder 8, so dass Werte größer 2 bedeuten, dass die Messungen abgeschlossen sind.

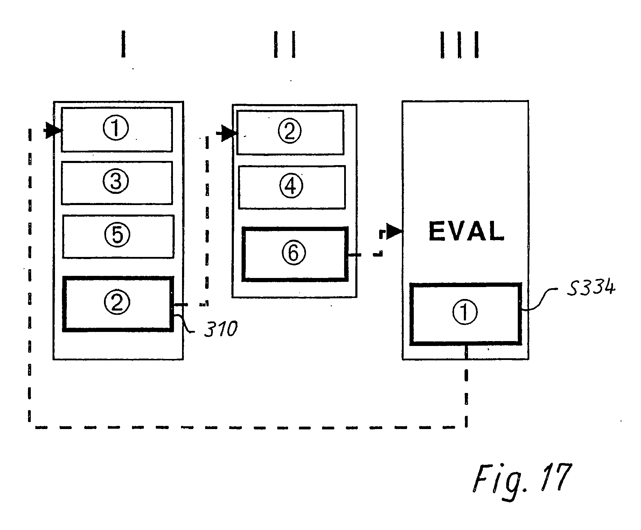

**Fig. 17** zeigt den Ablauf der Messung des Sollwerts, wie er sich durch das Programm der Fig. 16 ergibt.

Bei einer Drehstellung 1 des Rotors 36 beginnt das Programm beim Zustand SM = 1, durchläuft die Zustände 3 und 5, also die Messung der Periodendauer, und bleibt bei dem Zustand SM = 2 der Zustandsmaschine stehen, wie in S 310 von Fig. 19 dargestellt.

Bei einer Drehstellung II des Rotors 36 ergibt sich in der Abfrage S200 der Fig. 16 die Antwort Nein, weil die Zustandsmaschine zu Beginn den Wert 2 hat, und es werden jetzt die Zustände 2, 4 und 6 durchlaufen, d.h. es wird entweder die Signaldauer oder die Pausendauer gemessen. Am Ende dieser Messung bleibt die Zustandsmaschine auf SM = 6 stehen.

Bei einer Drehstellung III des Rotors 36 ergibt sich in der Abfrage S200 der Fig. 16 die Antwort Ja (Y), und es folgt die Auswertung (EVAL) der Daten im Modul S204 (Fig. 20). Anschließend geht die Zustandsmaschine in den Zustand SM = 1 (S334 in Fig. 20). Dies geschieht im Schritt S334 von Fig. 20. Von dort beginnt dann der Zyklus von neuem, wie in Fig. 17 durch die gestrichelten Linien angedeutet.

Auf diese Weise kann die Berechnung des Sollwerts zeitlich auf mehrere Drehstellungen verteilt werden. In Fig. 16 wird der linke Zweig S202 (Messung des Signals) bei jedem normalen Zyklus zweimal durchlaufen, und der rechte Zweig S204 (EVAL) nur einmal.

Dies wird gesteuert durch den Hallzähler HALL_CNT in S98 der Fig. 3, der bei jeder Flanke des Signals HALL weitergezählt wird und dabei ständig die Werte 0 bis 7 durchläuft. Bei einem vierpoligen Rotor 36 ergeben sich pro Umdrehung vier Flanken des Signals HALL. Es gilt dann das Schema:

| HALL_CNT | Pfad | Erfassung von |
|---|---|---|
| 0 | 124 | Sollwert |
| 1 | 128 | Sollwert |
| 2 | 124 | Sollwert |
| 3 | 126 | Istwert |
| 4 | 124 | Sollwert |
| 5 | 128 | Sollwert |
| 6 | 124 | Sollwert |
| 7 | 126 | Istwert |

Nach jeder Umdrehung erhält man also hier einen neuen Sollwert und einen neuen Istwert, also bei 60 U/s 60 Mal pro Sekunde.

**Fig. 18** zeigt die Interruptroutine S210, die durch eine Flanke des Signals 68 ausgelöst wird. Im Schritt S212 (Interrupt Sensitivität = steigende Flanke) wird der $\mu$ C 54 so eingestellt, dass er auf eine steigende Signalflanke (z.B. 144 in Fig. 5) an seinem Eingang 67 mit einem Interrupt reagiert. Anschließend wird in S214 ein Flag für den interrupt gelöscht, und bei S216 wird bei S216 wird der aktuelle Wert des Timers 66 in eine 16-Bit-Variable PWM_End kopiert.

In S218 wird nun geprüft, welcher der Interrupts eingegangen ist. Dies geschieht durch Prüfung, ob SM kleiner als 3 ist. Falls Ja, so handelte es sich entweder um SM = 1 oder SM = 2, also den ersten der beiden erwarteten Interrupts, und in S220 wird deshalb der Wert aus S216 in die Variable PWM_Start kopiert. Ist dagegen SM größer als 2, so ist der erfasste Interrupt bereits der zweite Interrupt, S218 wird über den Nein-Zweig verlassen, und in S222 werden weitere Interrupts gesperrt.

Anschließend an S220 wird in S224 der Wert SM um 2 erhöht. Ebenso wird anschließend an S222 in S226 der Wert SM um 2 erhöht. Bei S224 wird z.B. der Wert SM = 1 auf SM = 3 erhöht, und bei S226 wird SM = 3 auf SM = 5 erhöht, falls die Periodendauer T gemessen wurde.

Wurde aber die Impulsdauer t oder die Pausendauer t' gemessen, so wird in S224 der Wert SM = 2 auf SM = 4 erhöht, und in S226 wird der Wert SM = 4 auf SM = 6 erhöht. Anschließend an S226 geht die Routine zu S228 Return.

Im Anschluss an S224 werden zwei Sonderfälle behandelt. Bei S230 wird abgefragt, ob jetzt SM = 4 ist. Das bedeutet, dass bei der Messung der Impulsdauer t oder der Pausendauer t' als nächstes der zweite Interrupt erwartet wird, d.h. in Fig. 10 befindet man sich z.B. im Interrupt 146 und erwartet als nächstes den Interrupt 150. Falls Nein, geht das Programm direkt nach S228 Return. Falls Ja, so muss es sich um den zweiten Interrupt handeln, und das Programm geht zu S232, wo gefragt wird, ob FlagPM = 1 ist. Die Antwort Ja bedeutet Messung der Impulslänge, d.h. im Augenblick wird die Länge eines Pulses 69 gemessen. Deshalb wird bei S234 (Interrupt Sensitivität = fallende Flanke) die Empfindlichkeit des Eingangs 67 (Fig. 1) auf fallende Flanke umgeschaltet.

Wenn, wie in Fig. 11 dargestellt, der Impuls 69' nur wenige $\mu$s schmal ist, kann kein zweiter Interrupt erzeugt werden, wie bei Fig. 11 beschrieben. Deshalb wird in S236 geprüft, ob das Signal 68 bereits den Wert 0 angenommen hat. Das ist in Fig. 11a grafisch dargestellt, d.h. wenn der Impuls 69' bereits zu Ende ist, gilt Signal 68 = Low, und der zweite Interrupt wurde verpasst (missed). In diesem Fall wird in S238 SM = 8 gesetzt, also Error, bei S240 wird der Interrupt gesperrt, und bei S242 wird FlagPM = 0 gesetzt, also auf Pausenmessung umgeschaltet, da die Impulse zu kurz für eine Messung sind. Danach folgt S228.

Ist dagegen in S236 Signal 68 = 1, so ist das der in Fig. 10 dargestellte Fall, d.h. zum Zeitpunkt $t_{02}$ wird festgestellt, dass Signal 68 = High, das Programm geht direkt zu S228, und die Messung wird fortgesetzt.

Ist in S232 FlagPM = 0 (Pausenmessung), so wird im Schritt S244 geprüft, ob die Pause bereits zu Ende ist. Das ist in Fig. 12 dargestellt, wo am Ende des Interrupts 154 zum Zeitpunkt $t_{05}$ das Signal 68 bereits wieder hoch ist, d.h. der zweite Interrupt wurde verpasst.

Falls in S244 Signal 68 = 0 ist, geht das Programm direkt zu S228. Falls die Antwort in S244 Ja ist, wird in S246 SM = 8 gesetzt, also Fehler, in S250 wird der Interrupt am Eingang 67 gesperrt, und in S252 wird auf FlagPM = 1 umgeschaltet, also auf Impulsmessung, weil die Pausen zu kurz geworden sind und nicht mehr gemessen werden können.

**Fig. 19** zeigt die Routine S202 "Meas. Signal" für die Signalerfassung. Falls die Periodendauer T erfasst wird, ist SM = 1, und falls die Impuls- oder Pausendauer erfasst wird, ist SM = 2. Die Empfindlichkeit des Eingangs 67 wird bei SM = 1 in S264 (Interrupt Sensitivität = steigende Flanke) auf steigende Flanke eingestellt. Falls SM = 2 ist, wird im Schritt S266 geprüft, ob FlagPM = 0 ist, was Pausenmessung bedeutet. Falls Ja, wird in S268 (Interrupt Sensitivität = fallende Flanke) die Empfindlichkeit des Eingangs 67 auf fallende Flanke eingestellt, also auf den Beginn einer Pausenmessung.

Falls die Antwort in S266 Nein lautet, folgt eine Impulsmessung, die bisher eingestellte Empfindlichkeit (steigende Flanke) wird unverändert beibehalten, und das Programm geht, ebenso wie nach S264 und S268, zu S272, wo eine Timeout-Variable auf einen vorgegebenen Wert eingestellt wird, hier 150. Diese Variable wird anschließend in einer Warteschleife dekrementiert. Jede Schleife benötigt z.B. 10 $\mu$s, und da sie 150 mal durchlaufen wird, dauert die Verzögerungszeit maximal 1500 $\mu$s = 1,5 ms. Das genügt, um ein Signal 68 mit einer Frequenz von 2000 Hz, also einer Periodendauer T von 0,5 ms, sicher zu erfassen.

Da die Erfassung zufallsbedingt zu jedem Zeitpunkt des Signals 68 beginnen kann, muss man damit rechnen, dass man die Messung der ersten Flanke gerade verpasst hat, so dass die Warteschleife mindestens zwei mal 0,5 ms dauern muss, und mit Sicherheitszuschlag drei mal 0,5 ms = 1,5 ms.

Anschließend wird bei S274 ein Interrupt durch das Signal HALL (Fig. 1) zeitweilig gesperrt, da während der Routine gemäß Fig. 19 keine Änderung des Signals HALL zu erwarten ist. Bei S276 und S278 wird der Interrupt am Eingang 67 vorbereitet und aktiviert, und anschließend geht das Programm in die bereits erwähnte Warteschleife und wartet dort auf das Eintreffen der Interrupts. Hierzu dient die Interruptroutine S210, die bei Fig. 18 bereits beschrieben wurde und die durch die Signalflanke ausgelöst wird, welche in S212, S264 oder S268 eingestellt wurde.

In S280 wird geprüft, ob die beschriebene Timeout-Zeit von z.B. 1,5 ms noch nicht abgelaufen ist. Falls noch nicht abgelaufen, geht das Programm zum Schritt S282 (Timeout dekrementieren), wo die Variable Timeout bei jedem Durchlauf dekrementiert wird.

Während dieser Zeit laufen - zu irgendwelchen Zeitpunkten - nacheinander zwei Interruptroutinen gemäß Fig. 18 ab, wodurch die Zustandsmaschine (durch die Schritte S224 oder S226 der Fig. 18) entweder auf SM = 5 oder SM = 6 hochgezählt wird. Das wird in S284 bei jedem Durchlauf geprüft, und wenn dies der Fall ist, wird die Warteschleife verlassen, und das Programm geht zu S286, wo weitere Interrupts am Eingang 67 gesperrt und bei S288 der gesperrte Hall-Interrupt wieder entsperrt wird.

Wird im Schritt S280 festgestellt, dass Timeout = 0 ist, bevor alle Interrupts erfolgt sind, so wird Ursachenforschung betrieben. Hierbei wird zunächst in S290 der Eingang 67 (Fig. 1) für Interrupts gesperrt. Anschließend wird in S292 geprüft, ob SM einen der Werte 3, 4, 5, oder 6 hat, die in Fig. 13 erläutert sind. In diesem Fall hat die Interruptroutine (Fig. 18) nur den ersten Interrupt erkannt, nicht aber den zweiten. Deshalb wird in S294 SM = 8 gesetzt, also Fehler, die Messung wird nicht verwendet, und eine neue Messung beginnt. Anschließend geht das Programm zu S284 und von dort zu S286 etc.

Falls in S292 die Antwort Nein lautet, muss SM = 1 oder 2 sein, d.h. das Programm wartet nach 1,5 ms immer noch auf den ersten Interrupt. Dies ist die Situation gemäß Fig. 8 oder 9, d.h. am Eingang 67 ist das Signal 68 entweder ständig hoch, was PWM = 100 % entspricht, oder es ist ständig niedrig, was PWM = 0 % entspricht. Dies wird in S296 geprüft, und wenn das Signal 68 den Wert 1 hat, wird anschließend in S298 auf FlagPM = 1 umgeschaltet, also auf Impulsmessung.

Wenn in S296 das Signal 68 den Wert 0 hat, wird in S300 umgeschaltet auf FlagPM = 0, also auf Pausenmessung. Im Anschluss an S298 oder S300 wird bei S302 die Zustandsmaschine auf SM = 7 eingestellt. Anschließend geht das Programm über S284 weiter zu S286 und S288.

Im Anschluss an S288 wird in S304 aus den Werten PWM_End und PWM_Start, die während der beiden Interruptroutinen gespeichert wurden, der neue PWMWert NewPVal errechnet als

$$NewPVal = PWM\_End - PWM\_Start \qquad ...(3)$$

Dieser neue Wert kann die Periodendauer T sein, oder die Impulsdauer t, oder die Pausendauer t', je nach dem, welcher Wert zuvor gemessen wurde. Das wird in den folgenden Schritten geprüft. Hierzu wird in S306 geprüft, ob SM = 5 ist. Das bedeutet den Abschluss einer Messung der Periodendauer T, d.h. der neue Wert ist die Periodendauer T. Falls dies der Fall ist, wird deshalb in S308 der neue PWMWert NewPVal als neue Periodendauer T gespeichert, und in S310 wird in der Zustandsmaschine der neue Wert SM = 2 gespeichert, wie auch in Fig. 17 angegeben.

**Fig. 20** zeigt an einem Beispiel die weitere Auswertung der ermittelten Daten in der Routine S204 EVAL. Der Sollwert wird zunächst auf einen 8-Bit-Wert NorPVal normiert, entsprechend dem Wertebereich einer 8-Bit-Variablen. Dadurch hat er einen Wert, der einen Bereich von 0 und 255 hat, wobei 0 einem Tastverhältnis von 0 % und 255 einem Tastverhältnis von 100 % entspricht. Selbstverständlich sind auch beliebige andere Normierungen möglich, z.B. 255 = 0 % und 0 = 100 % Tastverhältnis, oder größere Wertebereiche, z.B. 0 bis 1023. Das richtet sich u.a. nach den Bedürfnissen und der Genauigkeit des verwendeten Drehzahlreglers.

In Fig. 20 wird im Schritt S322 geprüft, ob der neue PWMWert NewPVal (aus S304) länger ist als die Periodendauer T. In diesem Fall war die Messung ungenau, aber mit Sicherheit kann man sagen, dass die Impulsdauer t (oder bei einer Pausenmessung die Pausendauer t') fast so groß war wie T. Falls die Antwort in S322 Ja lautet, geht das Programm zu S324, und dort wird präliminär der normierte (d.h. nach einer festen Regel standardisierte) Sollwert NorPVal auf 255 gesetzt, ohne zu rechnen. Diese Festsetzung in S324 ist aber nur zutreffend, wenn im Augenblick eine Messung der Impulsdauer t durchgeführt wurde. Deshalb wird anschließend in S326 geprüft, ob FlagPM = 1 ist. Falls Nein, handelt es sich um den Wert von einer Pausenmessung, und dann wird anschließend in S328 der normierte Wert NorPVal auf

$$255 - 255 = 0$$

gesetzt.

In S322 wird auch abgefragt, ob die Zustandsmaschine den Wert SM = 7 hat. Dies bedeutet einen der beiden Fälle gemäß Fig. 8 oder 9. Auch in diesem Fall geht das Programm zu S324 und setzt präliminär den normierten Sollwert NorPVal auf 255: Falls eine Pausenmessung durchgeführt wurde, wird dieser präliminäre Wert anschließend in der gleichen Weise über die Schritte S326 und S328 auf 0 korrigiert.

Falls in S322 die Antwort Nein lautet, geht das Programm zu S328. Dort wird präliminär gerechnet

$$NorPVal = (255 * NewPVal)/T$$
$$(4)$$

Beträgt z.B. der neue PWMWert NewPVal 100 $\mu$s und T = 300 $\mu$s, so ist der präliminäre normierte Wert NorPVal

$$255 * 100/300 = 85.$$

Dieser Wert gilt nur bei einer Pulsmessung. Deshalb wird anschließend wieder bei S326 geprüft, ob eine Puls- oder Pausenmessung durchgeführt wurde, und im letzteren Fall wird der normierte Wert NorPVal in S328 korrigiert. Im Beispiel wurde der Wert 85 berechnet, und wenn sich dieser auf eine Pausenmessung bezieht, wird er korrigiert in

$$255 - 85 = 170,$$

d.h. dann würde der normierte PWMWert NorPVal 170 betragen.

Anschließend wird geprüft, ob bei den gemessenen periodischen Impulsen 68 die Impulsdauer t größer ist als die Pausendauer t', oder umgekehrt, und die Messmethode wird entsprechend angepasst. Deshalb geht das Programm bei einer Impulsmessung (Ja in S326) zu einem Schritt S330, wo geprüft wird, ob der normierte PWMWert NorPVal kleiner als 120 ist. Dies bedeutet, dass die Impulsdauer kleiner als 46 % der Periodendauer T ist. Falls Ja, wird anschließend in S332 auf Pausenmessung umgeschaltet, also FlagPM = 0. Danach geht das Programm zum Schritt S334, wo SM = 1 gesetzt wird, d.h. die Zustandsmaschine wird auf "T_Start" zurückgesetzt, wie auch in Fig. 17 bei S334 dargestellt, so dass eine neue Sollwertberechnung wieder bei SM = 1 beginnt. Danach geht das Programm zu S336 (Return).

Im Anschluss an S328 wird bei S338 geprüft, ob die Pausendauer größer ist als die Impulsdauer. Dabei wird geprüft, ob der in S328 berechnete normierte PWMWert NorPVal größer als 132 ist, also größer als 51 % der Periodendauer T. Falls Nein, bleibt die Art der Messung unverändert (ebenso wie bei S330). Falls Ja, wird in S340 auf Impulsmessung umgeschaltet, also FlagPM = 1. Danach geht das Programm ebenfalls zu den Schritten S334 und S336, die Messung ist abgeschlossen, und es liegt ein Sollwert in Form eines normierten PWMWertes NorPVal vor, der bei diesem Beispiel einen Wert im Bereich 0 bis 255 haben kann, und der die Drehzahl vorgibt.

Im Schritt S330 wird NorPVal mit dem Wert 120 verglichen, und im Schritt S338 mit dem Wert 132. Dies bewirkt eine Schalthysterese, d.h. bei einem Tastverhältnis zwischen 46 und 51 % können beide Arten von Messungen stattfinden, Puls oder Pause.

Die vorliegende Erfindung kann auch verwendet werden, um Zahlen von 0 bis 255, die in einer Impulsfolge verschlüsselt enthalten sind, lesbar zu machen. Bei einem elektronisch kommutierten Motor wird die Berechnung des Sollwerts bevorzugt so durchgeführt, dass sie auf mehrere Drehstellungen des Motors verteilt ist. Der Grund ist, dass diese Berechnung viel Zeit erfordert und deshalb andere Vorgänge im Motor stören könnte, vor allem die Kommutierung, sofern die Berechnung "konzentriert", also an einem Stück, ausgeführt würde.

Dadurch, dass die Messmethode automatisch auf Impulsmessung oder Pausenmessung umgeschaltet wird, ergibt sich eine höhere Genauigkeit, und man kann höhere Frequenzen messen. Die automatische Fehlererkennung, wie sie anhand der Fig. 10 bis 12 erläutert wurde, ermöglicht es, falsche Messergebnisse auszusondern und in den dort beschriebenen Fällen rasch auf eine bessere Messmethode umzuschalten, wie bei Fig. 18 beschrieben, um anschließend rasch einen neuen, besseren Sollwert zu erhalten.

**Patentansprüche**

1. Verfahren zum Bestimmen eines numerischen Wertes, welcher das Tastverhältnis eines sich periodisch wiederholenden impulsförmigen Signals (68) charakterisiert, mit folgenden Schritten:

    a) in zeitlichen Abständen wird die Periodendauer (T) des Signals bestimmt;
    b) in zeitlichen Abständen wird als charakteristische Größe (t; t') für dieses Signal (68) entweder die Dauer (t) eines Impulses (69) oder die Zeitdauer (t') zwischen zwei aufeinander folgenden Impulsen bestimmt;
    c) aus der Periodendauer (T) und der charakteristischen Größe (t; t') wird der numerische Wert (NorPVal) ermittelt, welcher das Tastverhältnis des Signals (68) charakterisiert,

    wobei die charakteristische Größe (t oder t') abhängig von der Größe eines numerischen Wertes-(NorPVal) bestimmt wird, welcher bei mindestens einer vorhergehenden Bestimmung des numerischen Wertes ermittelt wurde (Fig. 20).

2. Verfahren nach Anspruch 1, bei dem in zeitlichen Abständen die Periodendauer (T) des Signals bestimmt wird, indem bei zwei aufeinander folgenden Signalflanken gleicher Richtung jeweils ein Interrupt ausgelöst wird, der eine Zeitmessung enthält, und die Differenz der bei den beiden Interrupts ermittelten Zeiten gebildet wird.

3. Verfahren nach Anspruch 1 oder2, bei weichem dann, wenn die Impulsdauer (t) einen vorgegebenen ersten Prozentsatz der Periodendauer (T) unterschreitet, als charakteristische Größe für die Dauer eines Impulses der zeitliche Abstand (t') zwischen zwei aufeinander folgenden Impulsen bestimmt wird.

4. Verfahren nach Anspruch einem der Ansprüche 1 bis 3, bei weichem dann, wenn die Impulsdauer einen vorgegebenen zweiten Prozentsatz der Periodendauer (T) überschreitet, als charakteristische Größe für die Dauer eines Impulses die Zeitdauer (t) des Impulses bestimmt wird.

5. Verfahren nach Anspruch 3 und 4, bei welchem der vorgegebene zweite Prozentsatz (z.B. 51 %) größer ist als der vorgegebene erste Prozentsatz (z.B. 46%).

6. Verfahren nach einem der vorhergehenden Ansprüche, bei welchem zur Bestimmung der Periodendauer (T) oder der charakteristischen Größe (t; t') jeweils bei einer ersten Signalflanke am Beginn einer zu messenden Zeitspanne ein erster Interrupt (Fig.10:146) erzeugt wird, der eine erste Zeitmessung ($t_{01}$) einschließt, und bei einer zweiten Signalflanke am Ende der zu messenden Zeitspanne ein zweiter Interrupt (Fig. 10: 150) erzeugt wird, der eine zweite Zeitmessung ($t_{03}$) einschließt.

7. Verfahren nach Anspruch 6, bei welchem aus der zeitlichen Differenz zwischen zweiter Zeitmessung ($t_{03}$) und erster Zeitmessung ($t_{02}$) ein Wert (t) für die charakteristische Größe (NorPVal) berechnet wird (Fig. 10; Fig. 20).

8. Verfahren nach Anspruch 6 oder 7, bei weichem im Verlauf des ersten Interrupts (Fig: 11: 146; Fig. 12: 154) geprüft wird, ob sich das zu messende Signal (68) während dieses Interrupts so verändert hat, dass die zweite Signalflanke bereits aufgetreten ist

9. Verfahren nach Anspruch 6, bei welchem dann, wenn während des ersten Interrupts (Fg. 11: 146; Fig. 12: 154) festgestellt wird, dass die zweite Signalflanke (148') bereits aufgetreten ist, die charakteristische Größe anschließend nach einer anderen Messmethode (Fig. 18: S242, S252) bestimmt wird.

10. Verfahren nach einem der vorhergehenden Ansprüche, bei welchem dem Ablauf der Bestimmung von Periodendauer (T) und charakteristischer Größe (t; t') Werte (SM =1, 2 ...) einer Zustandsmaschine (Fig. 13) zugeordnet werden.

11. Verfahren nach Anspruch 10, bei welchem der augenblickliche Wert in der Zustandsmaschine nach Erfüllung bestimmter Kriterien erhöht wird (Fig. 18: S224, S226).

12. Verfahren nach Anspruch 10 oder 11, bei welchem der Ablauf mindestens einer Programmroutine vom augenblicklichen Zustand der Zustandsmaschine gesteuert wird (Fig. 18: S230).

13. Motor, welcher Computerprogrammmittel aufweist, die zur Ausführung der Schritte nach mindestens einem der vorhergehenden Ansprüche ausgebildet sind.

14. Motor nach Anspruch 13, welcher einen Drehzahlregler aufweist, wobei der numerische Wert (NorPVal) dazu dient, die Drehzahl zu bestimmen, auf welche der Drehzahlregler die Drehzahl des Motors regelt.

15. Motor nach Anspruch 14, bei welchem die Computerprogrammmittel so ausgebildet sind, dass die Bestimmung des numerischen Wertes (NorPVal) auf eine Mehrzahl von Drehstellungsbereichen (Fig. 17: I, II, III) des Motors verteilt ist.

16. Anordnung zum Bestimmen eines numerischen Wertes, welcher das Tastverhältnis eines sich periodisch wiederholenden impulsförmigen Signals (68) charakterisiert,
welche Anordnung eine Vorrichtung aufweist,

   • die in zeitlichen Abständen die Periodendauer (T) des Signals bestimmt,
   • die in zeitlichen Abständen als charakteristische Größe für dieses Signal entweder die Dauer (t) eines Impulses (69) dieses Signals (68) oder die Zeitdauer (t') zwischen zwei aufeinander folgenden Impulsen (69) bestimmt,
   • und die aus der Periodendauer (T) und der charakteristischen Größe (t; t') den numerischen Wert (NorPVal) ermittelt, welcher das Signal (68) kennzeichnet,

wobei die Vorrichtung dazu ausgebildet ist, die charakteristische Größe (t; t') abhängig von der Größe eines numerischen Wertes (NorPVal) zu bestimmen, welcher bei mindestens einer vorhergehenden Bestimmung dieses numerischen Wertes ermittelt wurde.

17. Anordnung nach Anspruch 16, bei welcher die Vorrichtung in zeitlichen Abständen die Periodendauer (T) des Signals bestimmt, indem bei zwei aufeinander folgenden Signalflanken gleicher Richtung jeweils ein Interrupt ausgelöst wird, der eine Zeitmessung enthält, und die Differenz der bei den beiden Interrupts ermittelten Zeiten gebildet wird.

18. Anordnung nach Anspruch 16 oder 17, bei welcher die Vorrichtung dazu ausgebildet ist, abhängig vom Verhältnis der Impulsdauer (t) zur Periodendauer (T) beim Unterschreiten eines vorgegebenen ersten Wertes dieses Verhältnisses als charakteristische Größe für die Dauer eines Impulses den zeitlichen Abstand (t') zwischen zwei aufeinander folgenden Impulsen zu bestimmen.

19. Anordnung nach einem der Ansprüche 16 bis 18, bei welcher die Vorrichtung dazu ausgebildet ist; abhängig vom Verhältnis der Impulsdauer (t) zur Periodendauer (T) beim Überschreiten eines vorgegebenen zweiten Wertes dieses Verhältnisses als charakteristische Größe für die Dauer eines Impulses die Zeitdauer (t) des Impulses zu bestimmen.

20. Anordnung nach Anspruch 18 und 19, bei welcher der vorgegebene zweite Wert (z.B. 51 %) größer ist als der vorgegebene erste Wert (z.B. 46 %).

21. Anordnung nach einem der Ansprüche 16 bis 20, welche dazu ausgebildet ist, zur Bestimmung der Periodendauer (T) oder der charakteristischen Größe (t; t') jeweils bei einer ersten Signalflanke am Beginn einer zu messenden Zeitspanne einen ersten Interrupt (Fig. 10: 146) zu erzeugen, der eine erste Zeitmessung ($t_{01}$) einschließt, und bei einer zweiten Signalflanke am Ende der zu messenden Zeitspanne einen zweiten Interrupt (Fig. 10; 150) zu erzeugen, der eine zweite Zeitmessung ($t_{03}$) einschließt.

22. Anordnung nach Anspruch 21, welche dazu ausgebildet ist, aus der zeitlichen Differenz zwischen zweiter Zeitmessung ($t_{03}$) und erster Zeitmessung ($t_{02}$) einen Wert (t) für die charakteristische Größe zu berechnen (Fig..10; Fig. 20).

23. Anordnung nach Anspruch 21 oder 22, welche dazu ausgebildet ist, im Verlauf des ersten Interrupts (Fig. 11: 146; Fig. 12: 154) zu prüfen, ob sich das zu messende Signal (68) während dieses Interrupts so verändert hat, dass die zweite Signalflanke bereits aufgetreten ist.

24. Anordnung nach Anspruch 21, welche dazu ausgebildet ist, während des ersten Interrupts (Fig. 11: 146; Fig. 12: 154) zu prüfen, ob die zwede-Signalflanke (148') bereits aufgetreten ist, und bejahendenfalls die charakteristische Größe anschließend nach einer anderen Messmethode (Fg. 18: S242, S252) zu bestimmen.

25. Anordnung nach einem der Ansprüche 16 bis 24, bei welcher eine Zustandsmaschine (Fig. 13) vorgesehen ist, welche den Ablauf der Bestimmung von Periodendauer (T) und charakteristischer Größe (t; t') in ihren augenblicklichen Werten widerspiegelt.

26. Anordnung nach Anspruch 25, welche dazu ausgebildet ist, den augenblicklichen Wert in der Zustandsmaschine nach Erfüllung bestimmter Kriterien zu erhöhen (Fig. 18: S224, S226).

27. Anordnung nach Anspruch 25 oder 26, bei welcher der Ablauf mindestens einer Programmroutine vom augenblicklichen Zustand der Zustandsmaschine gesteuert ist (Fig. 18: S230).

**Claims**

1. Method of determining a numeric value which characterizes the duty factor of a periodically repeating pulsed signal (68), with the following steps:

   a) at time intervals, the period duration (T) of the signal is determined;
   b) at time intervals, as the characteristic magnitude (t; t') for this signal (68), either the duration (t) of a pulse (69) or the time duration (t') between two successive pulses is determined;
   c) from the period duration (T) and the characteristic magnitude (t; t'), the numeric value (NorPVal) which characterizes the duty factor of the signal (68) is determined,

   wherein the characteristic magnitude (t or t') is determined depending on the magnitude of a numeric value (NorPVal), which was determined at at least one preceding determination of the numeric value (Fig. 20).

2. Method according to Claim 1, wherein at time intervals the period duration (T) of the signal is determined by an interrupt which includes a time measurement being triggered at each of two successive signal edges of the same direction, and the difference of the times determined at the two interrupts being formed.

3. Method according to Claim 1 or 2, wherein if the pulse duration (t) is less than a specified first percentage of the period duration (T), as the characteristic magnitude for the duration of a pulse the time interval (t') between two successive pulses is determined.

4. Method according to one of Claims 1 to 3, wherein if the pulse duration is greater than a specified second percentage of the period duration (T), as the characteristic magnitude for the duration of a pulse the time duration (t) of the pulse is determined.

5. Method according to Claim 3 and 4, wherein the specified second percentage (e.g. 51%) is greater than the specified first percentage (e.g. 46%).

6. Method according to one of the preceding claims, wherein to determine the period duration (T) or characteristic magnitude (t; t'), at each first signal edge at the start of an interval to be measured, a first interrupt (Fig. 10: 146), which includes a first time measurement (t01), is generated, and at a second signal edge at the end of the interval to be measured, a second interrupt (Fig. 10: 150), which includes a second time measurement (t03), is generated.

7. Method according to Claim 6, wherein from the time difference between the second time measurement (t03) and the first time measurement (t02), a value (t) for the characteristic magnitude (NorPVal) is calculated (Fig. 10; Fig. 20).

8. Method according to Claim 6 or 7, wherein, in the course of the first interrupt (Fig. 11: 146; Fig. 12: 154), there is a test for whether the signal (68) to be measured has changed during this interrupt so that the second signal edge has already occurred.

9. Method according to Claim 6, wherein if, during the first interrupt (Fig. 11: 146; Fig. 12: 154), it is established that the second signal edge (148') has already occurred, the characteristic magnitude is then determined according to a different measurement method (Fig. 18: S242, S252).

10. Method according to one of the preceding claims, wherein values (SM = 1, 2, ...) of a state machine (Fig. 13) are assigned to the sequence for determining the period duration (T) and characteristic magnitude (t; t').

11. Method according to Claim 10, wherein the momentary value in the state machine is increased after fulfilling specified criteria (Fig. 18: S224, S226).

12. Method according to Claim 10 or 11, wherein the sequence of at least one program routine is controlled by the momentary state of the state machine (Fig. 18: S230).

13. Motor having computer program means, which are in a form to carry out the steps according to at least one of the preceding claims.

14. Motor according to Claim 13, having a speed controller, the numeric value (NorPVal) being used to determine the rotational speed to which the speed controller controls the rotational speed of the motor.

15. Motor according to Claim 14, wherein the computer program means are in such a form that the determination of the numeric value (NorPVal) is distributed to multiple rotary position regions (Fig. 17: I, II, II) of the motor.

16. Arrangement for determining a numeric value which characterizes the duty factor of a periodically repeating pulsed signal (68), said arrangement having a device

    • which at time intervals determines the period duration (T) of the signal,
    • which at time intervals, as the characteristic magnitude for this signal, determines either the duration (t) of a pulse (69) of this signal (68) or the time duration (t') between two successive pulses (69);
    • and which from the period duration (T) and the characteristic magnitude (t; t'), determines the numeric value (NorPVal) which characterizes the signal (68),

    the device being designed to determine the characteristic magnitude (t; t') depending on the magnitude of a numeric value (NorPVal), which was determined at at least one preceding determination of this numeric value.

17. Arrangement according to Claim 16, wherein at time intervals the device determines the period duration (T) of the signal by an interrupt which includes a time measurement being triggered at each of two successive signal edges of the same direction, and the difference of the times determined at the two interrupts being formed.

18. Arrangement according to Claim 16 or 17, wherein the device is designed, depending on the ratio of the pulse duration (t) to the period duration (T), if this ratio is less than a specified first value, to determine as the characteristic magnitude for the duration of a pulse the time interval (t') between two successive pulses.

19. Arrangement according to one of Claims 16 to 18, wherein the device is designed, depending on the ratio of the pulse duration (t) to the period duration (T), if this ratio is greater than a specified second value, to determine as the characteristic magnitude for the duration of a pulse the time duration (t) of the pulse.

20. Arrangement according to Claim 18 and 19, wherein the specified second value (e.g. 51%) is greater than the specified first value (e.g. 46%).

21. Arrangement according to one Claims 16 to 20, which to determine the period duration (T) or characteristic magnitude (t; t'), is designed to generate, at each first signal edge at the start of an interval to be measured, a first interrupt (Fig. 10: 146), which includes a first time measurement (t01), and to generate, at a second signal edge at the end of the interval to be measured, a second interrupt (Fig. 10: 150), which includes a second time measurement (t03).

22. Arrangement according to Claim 21, which is designed to calculate (Fig. 10; Fig. 20), from the time difference between the second time measurement (t03) and the first time measurement (t02), a value (t) for the characteristic magnitude.

23. Arrangement according to Claim 21 or 22, which is designed to test, in the course of the first interrupt (Fig. 11: 146; Fig. 12: 154), whether the signal (68) to be measured has changed during this interrupt so that the second signal edge has already occurred.

24. Arrangement according to Claim 21, which is designed to test if, during the first interrupt (Fig. 11: 146; Fig. 12: 154), the second signal edge (148') has already occurred, and if so then to determine the characteristic magnitude according to a different measurement method (Fig. 18: S242, S252).

25. Arrangement according to one of Claims 16 to 24, wherein a state machine (Fig. 13), which reflects the sequence for determining the period duration (T) and characteristic magnitude (t; t') in its momentary values, is provided.

26. Arrangement according to Claim 25, which is designed to increase the momentary value in the state machine after fulfilling specified criteria (Fig. 18: S224, S226).

27. Arrangement according to Claim 25 or 26, wherein the sequence of at least one program routine is controlled by the momentary state of the state machine (Fig. 18: S230).

**Revendications**

1. Procédé pour déterminer une valeur numérique, laquelle caractérise le rapport cyclique d'un signal impulsionnel (68) se répétant périodiquement, comprenant les étapes suivantes :

   a) la durée de période (T) du signal est déterminée à intervalles de temps ;
   b) soit la durée (t) d'une impulsion (69), soit la durée temporelle (t') entre deux impulsions successives est déterminée à intervalles de temps comme grandeur caractéristique (t ; t') de ce signal (68) ;
   c) à partir de la durée de période (T) et de la grandeur caractéristique (t ; t'), la valeur numérique (NorPVal) qui caractérise le rapport cyclique du signal (68) est déterminée,

   la grandeur caractéristique (t ou t') étant déterminée en fonction de la grandeur d'une valeur numérique (NorPVal) qui a été déterminée lors d'au moins une détermination précédente de la valeur numérique (fig. 20).

2. Procédé selon la revendication 1, dans lequel la durée de période (T) du signal est déterminée à intervalles de temps en déclenchant sur deux flancs de signal successifs de même sens chaque fois une interruption qui contient une mesure de temps et en formant la différence des temps déterminés lors des deux interruptions.

3. Procédé selon la revendication 1 ou 2, dans lequel, quand la durée d'impulsion (t) est inférieure à un premier pourcentage prédéfini de la durée de période (T), l'intervalle de temps (t') entre deux impulsions successives est déterminé comme grandeur caractéristique de la durée d'une impulsion.

4. Procédé selon l'une des revendications 1 à 3, dans lequel, quand la durée d'impulsion dépasse un deuxième pourcentage prédéfini de la durée de période (T), la durée temporelle (t) de l'impulsion est déterminée comme grandeur caractéristique de la durée d'une impulsion.

5. Procédé selon les revendications 3 et 4, dans lequel le deuxième pourcentage prédéfini (par exemple 51 %) est supérieur au premier pourcentage prédéfini (par exemple 46 %).

6. Procédé selon l'une des revendications précédentes, dans lequel, pour déterminer la durée de période (T) ou la grandeur caractéristique (t ; t'), une première interruption (fig. 10 : 146) qui inclut une première mesure de temps ($t_{01}$) est générée chaque fois sur un premier flanc de signal au début d'un intervalle de temps à mesurer, et une deuxième interruption (fig. 10 : 150) qui inclut une deuxième mesure de temps ($t_{03}$) est générée sur un deuxième flanc de signal à la fin de l'intervalle de temps à mesurer.

7. Procédé selon la revendication 6, dans lequel une valeur (t) pour la grandeur caractéristique (NorPVal) est calculée (fig. 10 ; fig. 20) à partir de la différence de temps entre deuxième mesure de temps ($t_{03}$) et première mesure de temps ($t_{02}$).

8. Procédé selon la revendication 6 ou 7, dans lequel au cours de la première interruption (fig. 11 : 146 ; fig. 12 : 154), il est contrôlé si le signal (68) à mesurer a changé pendant cette interruption au point que le deuxième flanc de signal est déjà survenu.

9. Procédé selon la revendication 6, dans lequel, si pendant la première interruption (fig. 11 : 146 ; fig. 12 : 154), il est constaté que le deuxième flanc de signal (148') est déjà survenu, la grandeur caractéristique est ensuite déterminée selon une autre méthode de mesure (fig. 18 : S242, S252).

10. Procédé selon l'une des revendications précédentes, dans lequel des valeurs (SM = 1, 2...) d'une machine d'état (fig. 13) sont associées au déroulement de la détermination de la durée de période (T) et de la grandeur caractéristique (t ; t').

11. Procédé selon la revendication 10, dans lequel la valeur instantanée dans la machine d'état est augmentée une fois que certains critères sont remplis (fig. 18 : S224, S226).

12. Procédé selon la revendication 10 ou 11, dans lequel le déroulement d'au moins une routine de programme est commandé par l'état instantané de la machine d'état (fig. 18 : S230).

13. Moteur qui présente des moyens de programmation par ordinateur qui sont conçus pour exécuter les étapes selon au moins l'une des revendication précédentes.

14. Moteur selon la revendication 13, lequel présente un régulateur de vitesse de rotation, la valeur numérique (NorPVal) servant à déterminer la vitesse de rotation sur laquelle le régulateur de vitesse de rotation régule la vitesse de rotation du moteur.

15. Moteur selon la revendication 14, dans lequel les moyens de programmation par ordinateur sont conçus de façon que la détermination de la valeur numérique (NorPVal) soit répartie sur une pluralité de plages de position de rotation (fig. 17 : I, II, III) du moteur.

16. Agencement pour déterminer une valeur numérique, laquelle caractérise le rapport cyclique d'un signal impulsionnel (68) se répétant périodiquement, lequel agencement comprend un dispositif

   - qui détermine à intervalles de temps la durée de période (T) du signal,
   - qui détermine à intervalles de temps comme grandeur caractéristique (t ; t') de ce signal (68) soit la durée (t) d'une impulsion (69) de ce signal (68), soit la durée temporelle (t') entre deux impulsions (69) successives,
   - et qui détermine à partir de la durée de période (T) et de la grandeur caractéristique (t ; t') la valeur numérique (NorPVal) qui caractérise le signal (68),

   le dispositif étant conçu pour déterminer la grandeur caractéristique (t ; t') en fonction de la grandeur d'une valeur numérique (NorPVal) qui a été déterminée lors d'au moins une détermination précédente de cette valeur numérique.

17. Agencement selon la revendication 16, dans lequel le dispositif détermine à intervalles de temps la durée de période (T) du signal en déclenchant sur deux flancs de signal successifs de même sens chaque fois une interruption qui contient une mesure de temps et en formant la différence des temps déterminés lors des deux interruptions.

18. Agencement selon la revendication 16 ou 17, dans lequel le dispositif est conçu pour déterminer en fonction du rapport entre durée d'impulsion (t) et durée de période (T), en cas de non-atteinte d'une première valeur prédéfinie de ce rapport, l'intervalle de temps (t') entre deux impulsions successives comme grandeur caractéristique de la durée d'une impulsion.

19. Agencement selon l'une des revendications 16 à 18, dans lequel le dispositif est conçu pour déterminer en fonction du rapport entre durée d'impulsion (t) et durée de période (T), en cas de dépassement d'une deuxième valeur prédéfinie de ce rapport, la durée temporelle (t) de l'impulsion comme grandeur caractéristique de la durée d'une impulsion.

20. Agencement selon les revendications 18 et 19, dans lequel la deuxième valeur prédéfinie (par exemple 51 %) est supérieure à la première valeur prédéfinie (par exemple 46 %).

21. Agencement selon l'une des revendications 16 à 20, lequel est conçu, pour déterminer la durée de période (T) ou la grandeur caractéristique (t ; t'), pour générer une première interruption (fig. 10 : 146) qui inclut une première mesure de temps ($t_{01}$) chaque fois sur un premier flanc de signal au début d'un intervalle de temps à mesurer, et pour générer une deuxième interruption (fig. 10 : 150) qui inclut une deuxième mesure de temps ($t_{03}$) sur un deuxième flanc de signal à la fin de l'intervalle de temps à mesurer.

22. Agencement selon la revendication 21, lequel est conçu pour calculer à partir de la différence de temps entre deuxième mesure de temps ($t_{03}$) et première mesure de temps ($t_{02}$) une valeur (t) pour la grandeur caractéristique à calculer (fig. 10 ; fig. 20).

23. Agencement selon la revendication 21 ou 22, lequel est conçu pour contrôler au cours de la première interruption (fig. 11 : 146 ; fig. 12 : 154) si le signal (68) à mesurer a changé pendant cette interruption au point que le deuxième flanc de signal est déjà survenu.

24. Agencement selon la revendication 21, lequel est conçu pour contrôler pendant la première interruption (fig. 11 : 146 ; fig. 12 : 154), si le deuxième flanc de signal (148') est déjà survenu, et, dans l'affirmative, pour déterminer ensuite la grandeur caractéristique selon une autre méthode de mesure (fig. 18 : S242, S252).

25. Agencement selon l'une des revendications 16 à 24, dans lequel il est prévu une machine d'état qui reflète dans ses valeurs instantanées le déroulement de la détermination de la durée de période (T) et de la grandeur caractéristique (t ; t').

26. Agencement selon la revendication 25, lequel est conçu pour augmenter la valeur instantanée dans la machine d'état une fois que certains critères sont remplis (fig. 18 : S224, S226).

27. Agencement selon la revendication 25 ou 26, dans lequel le déroulement d'au moins une routine de programme est commandé par l'état instantané de la machine d'état (fig. 18 : S230).

*Fig. 1*

*Fig. 2*

EP 1 413 045 B1

Fig. 3

a)

120 — HALL = HIGH     122

HALL = LOW     120 — HALL = H

0°el.     180°el.     360°el.

b)

124 130     126 130     124 130

Komm. — 136     Komm. — 136     Komm. — 136

SW + Komm. — 134     IW + Komm. — 138     SW + Komm. — 134

134

EP 1 413 045 B1

*Fig. 4*

Fig.5

$$t + t' = T$$

Fig. 6

Fig. 7

Fig. 8

Fig. 9

Fig. 10

Fig. 11

*Fig. 12*

| SM | State |
|----|-------|
| 1 | T_ Start |
| 2 | t1_ Start |
| 3 | T_ End |
| 4 | t1_ End |
| 5 | T_ over |
| 6 | t1_ over |
| 7 | Limit |
| 8 | Error |

Fig. 13

Fig. 14

Fig. 15

Fig. 16

Fig. 17

Fig. 18

Fig. 19

```
                    ⎛  EVAL  ⎞————— S 204
                    ⎝        ⎠
                         │
                         ▼            ——— S 322
                    ╱NewPVal >= T╲
            Y      ╱     OR        ╲      N
      ┌─────────◄╱      SM = 7      ╲►─────────┐
      │   S 324  ╲                  ╱          │   ——— S 328
      │           ╲                ╱           │
      ▼                                        ▼
┌──────────────────┐          ┌───────────────────────────────┐
│  NorPVal = 255   │          │ NorPVal = (255 * NewPVal) / T  │
└──────────────────┘          └───────────────────────────────┘
      │                                        │
      └────────────────┐      ┌────────────────┘
                       ▼      ▼          ——— S 326
                    ╱              ╲
        Y          ╱  FlagPM = 1 ?  ╲          N
  ┌────────────◄──╱                  ╲──►───────────┐
  │  S 330        ╲                  ╱              │
  │                ╲              ╱                 ▼
  ▼                                      ┌───────────────────────┐
╱              ╲                         │ NorPVal = 255 - NorPVal│——— S 328
╱ NorPVal < 120 ╲────────────N           └───────────────────────┘
╲               ╱            │                      │
 ╲             ╱             │                      ▼
      │Y                     │              ╱              ╲      ——— S 338
      ▼         ——— S 332    │     N       ╱ NorPVal > 132  ╲
┌──────────────────┐        │  ◄─────────╲                 ╱
│    FlagPM = 0    │        │             ╲               ╱
└──────────────────┘        │                   │Y
      │                     │                   ▼
      └──────────┐          │           ┌──────────────────┐
                 ▼          ▼           │    FlagPM = 1    │——— S 340
                 └──────────┤           └──────────────────┘
                            │                   │
                            ◄───────────────────┘
                            ▼
              ┌──────────────────┐
              │     SM = 1       │——— S 334
              └──────────────────┘
                            │
                            ▼
              ⎛    Return    ⎞————— S 336
              ⎝              ⎠
```

# Fig. 20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4241702 A
- EP 0209656 A
- DE 10036839 A